# EUROPEAN PATENT APPLICATION

(11) **EP 1 223 678 A2**
(43) Date of publication of application: **17.07.2002**
(21) Application number: 01130717.0
(22) Date of filing: 21.12.2001
(51) Int. Cl.: H03M 13/27

(54) **Interleave circuit, de-interleave circuit and xDSL modem**

(30) Priority: 27.12.2000 JP 2000397073
(71) Applicant: MATSUSHITA ELECTRIC INDUSTRIAL CO., LTD., Kadoma-shi, Osaka 571-8501 (JP)
(72) Inventor: Uto, Hiroshi, Ibaraki-shi, Osaka 567-0861 (JP)
(74) Representative: Grünecker, Kinkeldey, Stockmair & Schwanhäusser Anwaltssozietät

(57) **Abstract**

When a frame length N of input data is an even number, a read address generator generates twice in succession an address at which head byte data of each frame of the input data is stored. The head byte data of each frame of the input data is thus read from a memory twice in succession. The data of the frame length (N + 1) having the head byte data of each frame inserted as a dummy byte is then written to another memory according to a write address from a write address generator.

## Description

### BACKGROUND OF THE INVENTION

### 1. Field of the Invention

The present invention generally relates to an interleave circuit, a de-interleave circuit and an xDSL (x Digital Subscriber Line) modem. More particularly, the present invention relates to an interleave circuit adapted for a convolutional interleave method in which data is continuously rearranged regardless of the frame structure, a de-interleave circuit for restoring the data rearranged by the interleave circuit, and an xDSL modem including the interleave circuit and/or the de-interleave circuit.

### 2. Description of the Related Art

Recent progress in computer technology and information communications technology is remarkable, and these technologies are also increasingly widespread among general households. Moreover, digital recording technology has also made rapid progress like a high-capacity recording medium like PD and DVD (Digital Versatile Disk). High-speed, high-capacity communications are more likely to be subjected to noise-induced errors. In a recording system, slight stain or defective surface material would cause fatal errors. One method for controlling these errors is an error-correcting code. A currently used error-correcting code is divided into two types: a convolutional code and a block code. The convolutional code is mainly used in a communication system, and the block code is mainly used in a recording system. One example of the block code is a Reed-Solomon code. The Reed-Solomon coded data is normally rearranged by interleave operation. The interleave operation is conducted in order to efficiently obtain the capability of the error-correcting code by dispersing burst errors and converting them into random errors.

The ADSL (Asymmetric Digital Subscriber Line) technology defined in ITU (International Telecommunication Union) recommendations G.992.1 and G992.2 uses the Reed-Solomon code. In the ADSL, the state of a transmission path for communications varies depending on the situations. Therefore, a transmitting ADSL modem and a receiving ADSL modem together determine the code length (frame length) of the Reed-Solomon coded data and the interleave depth in an initialization routine in view of the communication state. The interleave method defined in ITU recommendations G.992.1 and G992.2 is a convolutional interleave method.

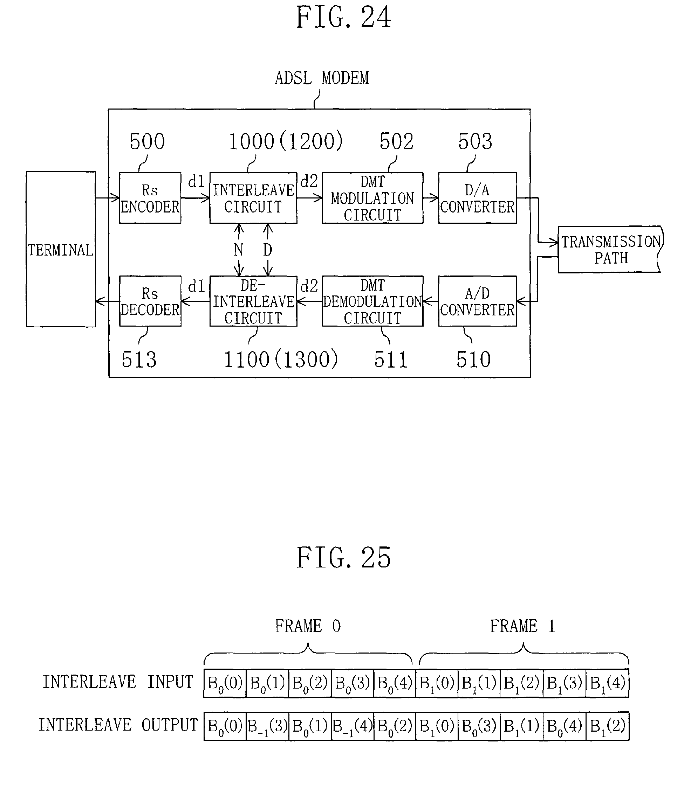

Convolutional interleave operation is normally conducted as follows: It is herein assumed that the frame length is N bytes, the byte data in each frame is B(0), B(1), B(2), ..., B(N-1), and the interleave depth is D. First, the i^{th} byte data B(i) is transmitted with a delay of (D - 1) × i. FIG. **25** shows an exemplary arrangement of the byte data before and after the interleave operation. In the example of FIG. **25**, the frame length **N** = 5 (bytes) and the interleave depth D = 2.

According to ITU recommendations G.992.1 and G992.2, the interleave depth is set to 2ⁿ (where n is a positive integer). In this case, only the data having an odd frame length **N** before interleave operation can be subjected to the above convolutional interleave operation. When the frame length **N** is an even number, a dummy byte is added to the data into the frame length of (N+1) bytes, and then interleave operation is conducted. However, a conventional interleave circuit is not capable of realizing such interleave operation.

### SUMMARY OF THE INVENTION

It is an object of the present invention to provide an interleave circuit capable of implementing interleave operation according to ITU recommendations G.992.1 and G.992.2.

An interleave circuit according to one aspect of the present invention includes a first memory, a first read address generating section, a second memory, and a first write address generating section. The first memory stores a plurality of frames. Each of the plurality of frames includes N data (where N is a positive integer). The first read address generating section sequentially applies to the first memory a read address for reading each of the N data included in each frame stored in the first memory. The first write address generating section applies to the second memory a write address for writing to the second memory the data read from the first memory according to the read address from the first read address generating section. When N is an even number, the first read address generating section applies twice in succession to the first memory a read address for reading one of the N data included in each frame stored in the first memory. The first write address generating section applies as the write address to the second memory an address that is incremented by an interleave depth in response to every write access to the second memory. When N is an even number, the first write address generating section applies a sum of the number of frames that have already been transferred from the first memory to the second memory and a read address of one of the data in each frame that is first read from the first memory as a write address for writing the data first read from the first memory to the second memory. When N is an odd number, the first write address generating section applies the read address of the data first read from the first memory as the write address for writing the data first read from the first memory to the second memory.

Preferably, the interleave depth is 2ⁿ (where n is a positive integer).

In the above interleave circuit, when N is an even number, the first read address generating section applies twice in succession to the first memory a read address for reading one of the N data included in each frame stored in the first memory. As a result, the one of the N data included in each frame is read from the first memory twice in succession. (N + 1) data (per frame) having the one of the N data in each frame inserted as dummy data is thus written to the second memory according to the write address from the first write address generating section. This enables the interleave operation according to ITU recommendations G.992.1 and G.992.2 to be conducted whether N is an even number or an odd number.

Preferably, when N is an even number, the first read address generating section applies to the first memory twice in succession a read address for reading head data of each frame stored in the first memory.

Preferably, the above interleave circuit further includes a register and a selector. The register stores dummy data. The selector selectively applies to the second memory the dummy data stored in the register or the data read from the first memory. When N is an even number, the selector applies to the second memory the dummy data stored in the register instead of the one of the N data that is read twice in succession from the first memory.

Preferably, each of the N data included in each of the plurality of frames is byte data.

A de-interleave circuit according to another aspect of the present invention is a circuit for de-interleaving data interleaved by the above interleave circuit. The de-interleave circuit includes a third memory, a second read address generating section, a fourth memory, and a second write address generating section. The third memory stores the data interleaved by the interleave circuit. The second read address generating section applies to the third memory a read address for reading each of the data stored in the third memory. The second write address generating section applies to the fourth memory a write address for writing to the fourth memory the data read from the third memory according to the read address from the second read address generating section. The second read address generating section applies as the read address to the third memory an address that is incremented by the interleave depth in response to every read access to the third memory. When N is an even number, the second read address generating section applies a sum of the number of frames that have already been transferred from the third memory to the fourth memory and a write address for writing one of the data in each frame that is first read from the first memory of the interleave circuit to the fourth memory as a read address for reading from the third memory the data first read from the first memory. When N is an odd number, the second read address generating section applies the write address for writing the data that is first read from the first memory to the fourth memory as the read address for reading from the third memory the data first read from the first memory. When N is an even number, the second write address generating section applies twice in succession to the fourth memory a write address for writing the one of the N data that is read twice in succession from the first memory of the interleave circuit.

In the above de-interleave circuit, when N is an even number, the one of the N data that is read twice in succession from the first memory of the interleave circuit is written to the same address of the fourth memory twice in succession. Thus, the dummy data inserted by the interleave circuit can be removed. As a result, the data rearranged by the interleave operation of the interleave circuit can be restored to the original data (i.e., the data before the interleave operation).

An xDSL modem according to still another aspect of the present invention includes the above interleave circuit.

An xDSL modem according to yet another aspect of the present invention includes the above de-interleave circuit.

An interleave circuit according to a further aspect of the present invention includes a first memory, a write address generating section, a first address register, and a first adder. The write address generating section sequentially applies to the first memory a write address for writing each of N data included in each of a plurality of frames (where N is a positive integer). The first address register generates, when N is an odd number, a value that has an initial value "0" and that is incremented by N every time N data are written to the first memory, and generates, when N is an even number, a value that has an initial value equal to an interleave depth and that is incremented by (N + 1) every time N data are written to the first memory. The first adder increments the write address from the write address generating section by the interleave depth in response to every write access to the first memory. The write address generating section applies an output of the first address register as a write address for writing head data of each frame to the first memory, and applies an output of the first adder as a write address for writing data other than the head data of each frame to the first memory.

Preferably, the interleave depth is 2ⁿ (where n is a positive integer).

According to the above interleave circuit, the interleave operation can be conducted whether N is an even number or an odd number. In other words, the interleave operation according to ITU recommendations G.992.1 and G.992.2 can be conducted whether N is an even number or an odd number.

Preferably, each of the N data included in each of the plurality of frames is byte data.

A de-interleave circuit according to a still further aspect of the present invention is a circuit for de-interleaving data interleaved by the above interleave circuit. The de-interleave circuit includes a second memory, a read address generating section, a second address register, and a second adder. The second memory stores the data interleaved by the interleave circuit. The read address generating section applies to the second memory a read address for reading each data stored in the second memory. The second address register generates, when N is an odd number, a value that has an initial value *"*0*"* and that is incremented by N every time N data are read from the second memory, and generates, when N is an even number, a value that has an initial value equal to the interleave depth and that is incremented by (N + 1) every time N data are read from the second memory. The second adder increments the read address from the read address generating section by the interleave depth in response to every read access to the second memory. The read address generating section applies an output of the second address register to the second memory as a read address every time N data are read from the second memory, and otherwise applies an output of the second adder to the second memory as a read address.

The above de-interleave circuit implements the de-interleave operation by switching a read-address generation and control mechanism and a write-address generation and control mechanism of the above interleave circuit with each other. As a result, the data rearranged by the interleave operation of the above interleave circuit can be restored to the original data (i.e., the data before the interleave operation).

An xDSL modem according to a yet further aspect of the present invention includes the above interleave circuit.

An xDSL modem according to a yet further aspect of the present invention includes the above de-interleave circuit.

### BRIEF DESCRIPTION OF THE DRAWINGS

FIG. **1** is a block diagram of the overall structure of an interleave circuit according to a first embodiment of the present invention;
FIG. **2** shows an input data structure;
FIG. **3** is a timing chart illustrating operation of the interleave circuit of FIG. **1** when the frame length is an even number;
FIG. **4** shows the correspondence of data before and after interleave operation;
FIG. **5** is a timing chart illustrating operation of the interleave circuit of FIG. **1** when the frame length is an odd number;
FIG. **6** shows the correspondence of data before and after interleave operation;
FIG. **7** is a block diagram of the overall structure of an interleave circuit according to a modification of the first embodiment;
FIG. **8** is a timing chart illustrating operation of the interleave circuit of FIG. **7** when the frame length is an even number;
FIG. **9** is a block diagram of the overall structure of a de-interleave circuit according to a second embodiment of the present invention;
FIG. **10** is a timing chart illustrating operation of the de-interleave circuit of FIG. **9** when the frame length is an even number;
FIG. **11** shows the correspondence of data before and after de-interleave operation;
FIG. **12** is a timing chart illustrating operation of the de-interleave circuit of FIG. **9** when the frame length is an odd number;
FIG. **13** shows the correspondence of data before and after de-interleave operation;
FIG. **14** is a block diagram of the overall structure of an interleave circuit according to a third embodiment of the present invention;
FIG. **15** is a timing chart illustrating operation of the interleave circuit of FIG. **14** when the frame length is an even number;
FIG. **16** shows the correspondence of data before and after interleave operation;
FIG. **17** is a timing chart illustrating operation of the interleave circuit of FIG. **14** when the frame length is an odd number;
FIG. **18** shows the correspondence of data before and after interleave operation;
FIG. **19** is a block diagram of the overall structure of a de-interleave circuit according to a fourth embodiment of the present invention;
FIG. **20** is a timing chart illustrating operation of the de-interleave circuit of FIG. **19** when the frame length is an even number;
FIG. **21** shows the correspondence of data before and after de-interleave operation;
FIG. **22** is a timing chart illustrating operation of the de-interleave circuit of FIG. **19** when the frame length is an odd number;
FIG. **23** shows the correspondence of data before and after de-interleave operation;
FIG. **24** is a block diagram of the structure of an ADSL modem according to a fifth embodiment of the present invention; and
FIG. **25** shows the byte data arrangement before and after convolutional interleave operation.

### DESCRIPTION OF THE PREFERRED EMBODIMENTS

Hereinafter, embodiments of the present invention will be described in detail in conjunction with the accompanying drawings. Note that the same or corresponding portions are denoted with the same reference numerals and characters throughout the figures, and description thereof will not be repeated.

### (First Embodiment)

### [Structure of Interleave Circuit]

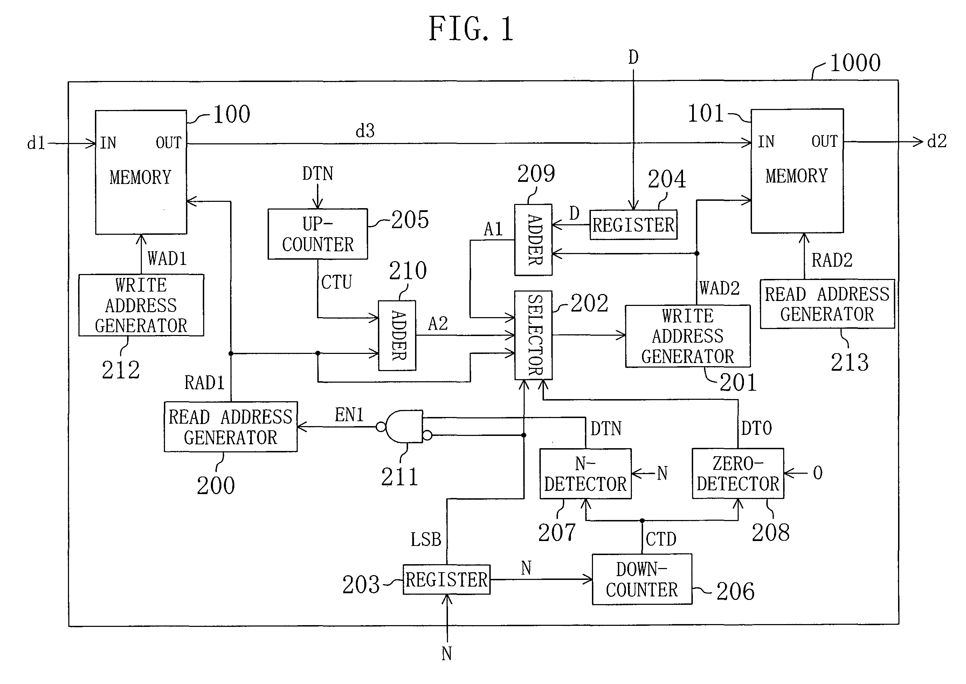

FIG. **1** is a block diagram of the overall structure of an interleave circuit according to the first embodiment of the present invention. The interleave circuit **1000** of FIG. **1** is a convolutional interleave circuit for continuously rearranging input data **d1** regardless of the frame structure and outputting the resultant data as output data **d2.** The interleave circuit **1000** includes memories **100, 101,** read address generators **200, 213,** write address generators **201, 212,** a selector **202,** registers **203, 204,** an up-counter **205,** a down-counter **206,** an N-detector **207,** a zero-detector **208,** adders **209, 210,** and an enable signal generator **211.**

External input data **d1** is written to the memory **100** according to a write address **WAD1** from the write address generator **212.** The data written to the memory **100** is read according to a read address **RAD1** from the read address generator **200.** The data **d3** thus read from the memory **100** is written to the memory **101** according to a write address **WAD2** from the write address generator **201.** The data written to the memory **101** is read according to a read address **RAD2** from the read address generator **213.** The data **d2** thus read from the memory **101** is output to the outside.

The register **203** stores a frame length **N** applied from the outside. The frame length **N** indicates the number of data included in each frame of the input data **d1.** The register **204** stores an interleave depth **D** applied from the outside.

The write address generator **212** outputs a write address **WAD1.** The write address generator **212** increments the write address **WAD1** by 1 in response to every write access to the memory **100.** It is herein assumed that the initial value of the write address **WAD1** is zero.

In response to every read access to the memory **100,** the down-counter **206** decrements the frame length **N** stored in the register **203** and having its least significant bit replaced with 1 minus 1 by 1 for output.

The N-detector **207** outputs an active (logical high level) detection signal **DTN** when the output **CTD** of the down-counter **206** matches N. Otherwise, the N-detector **207** outputs an inactive (logical low level) detection signal **DTN.**

The zero-detector **208** outputs an active (logical high level) detection signal **DT0** when the output **CTD** of the down-counter **206** matches zero. Otherwise, the zero-detector **208** outputs an inactive (logical low level) detection signal **DT0.**

The enable signal generator **211** outputs an inactive (logical low level) enable signal **EN1** when the detection signal **DTN** from the N-detector **207** is at logical high level and the least significant bit **LSB** of the frame length **N** stored in the register **203** is zero (at logical low level). Otherwise, the enable signal generator **211** outputs an active (logical high level) enable signal **EN1.**

The read address generator **200** outputs a read address **RAD1.** When the enable signal **EN1** from the enable signal generator **211** is active, the read address generator **200** increments the read address **RAD1** by 1 in response to every read access to the memory **100.** When the enable signal **EN1** is inactive, the read address generator **200** does not increment the read address **RAD1.** It is herein assumed that the initial value of the read address **RAD1** is zero.

The up-counter **205** counts the number of frames transferred from the memory **100** to the memory **101** (including a frame being transferred) for output. More specifically, the up-counter **205** increments the count value **CTU** by 1 in response to every reception of an active detection signal **DTN** from the N-detector **207.** It is herein assumed that the initial value of the count value **CTU** is zero.

The adder **210** adds the count value **CTU** of the up-counter **205** and the read address **RAD1** from the read address generator **200.** The adder **209** adds the interleave depth **D** stored in the register **204** and the write address **WAD2** from the write address generator **201.**

In response to the detection signal **DT0** from the zero-detector **208** and the least significant bit **LSB** of the frame length **N** stored in the register **203,** the selector **202** selects one of the output **A1** of the adder **209,** the output **A2** of the adder **210** and the read address **RAD1** for output. More specifically, when the detection signal **DT0** from the zero-detector **208** is inactive, the selector **202** selects the output **A1** of the adder **209** for output. When the detection signal **DT0** from the zero-detector **208** is active and the least significant bit **LSB** of the frame length **N** is zero, the selector **202** selects the output **A2** of the adder **210** for output. When the detection signal **DT0** from the zero-detector **208** is active and the least significant bit **LSB** of the frame length **N** is 1, the selector **202** selects the read address **RAD1** for output.

The write address generator **201** outputs the output of the selector **202** as write address **WAD2.** It is herein assumed that the initial value of the write address **WAD2** is zero. The write address **WAD2** is incremented by +D in response to every write access to the memory **101.**

The read address generator **213** outputs a read address **RAD2.** The read address generator **213** increments the read address **RAD2** by 1 in response to every read access to the memory **101.** It is herein assumed that the initial value of the read address **RAD2** is zero.

### [Operation of Interleave Circuit]

Hereinafter, operation of the interleave circuit **1000** thus structured will be described.

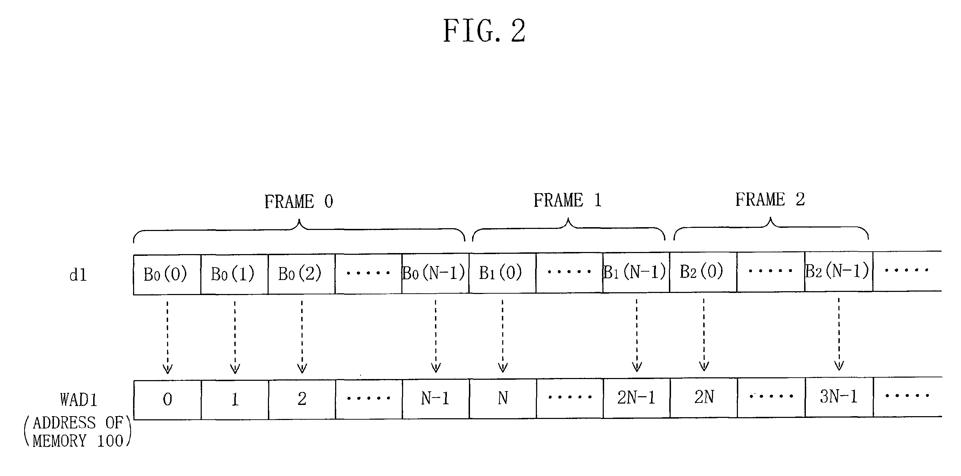

Input data **d1** is applied from the outside to the interleave circuit **1000.** As shown in FIG. **2,** the input data **d1** is a data string including a plurality of frames. Each frame includes N byte data **B(0)** to **B(N-1).** Accordingly, the number of data included in each frame of the input data **d1,** that is, the frame length of the input data **d1,** is N. The input data **d1** is sequentially applied in the following order: byte data **B**_{**0**}**(0), B**_{**0**}**(1), ...**, **B**_{**0**}**(N-1)** of frame **0,** byte data **B**_{**1**}**(0), B**_{**1**}**(1), ..., B**_{**1**}**(N-1)** of frame 1, byte data **B**_{**2**}**(0), ...** of frame **2** and the like. The input data **d1** is sequentially written to the memory **100** on a byte-by-byte basis according to the write address **WAD1** from the write address generator **212.** More specifically, as shown in FIG. **2**, byte data **B**_{**0**}**(0)** of frame **0** is written to address **0** of the memory **100,** byte data **B**_{**0**}**(1)** of frame **0** is written to address **1** thereof, byte data **B**_{**0**}**(N-1)** of frame **0** is written to address **(N-1)** thereof, byte data **B**_{**1**}**(0)** of frame **1** is written to address **N** thereof, and the like. The frame length **N** of the input data **d1** is applied to the register **203,** and the interleave depth **D** is applied to the register **204.** The interleave depth **D** is herein set to 2ⁿ (where n is a positive integer). Description will now be given for the cases where the frame length **N** of the input data **d1** is an even number and an odd number.

(a) When the frame length **N** is an even number

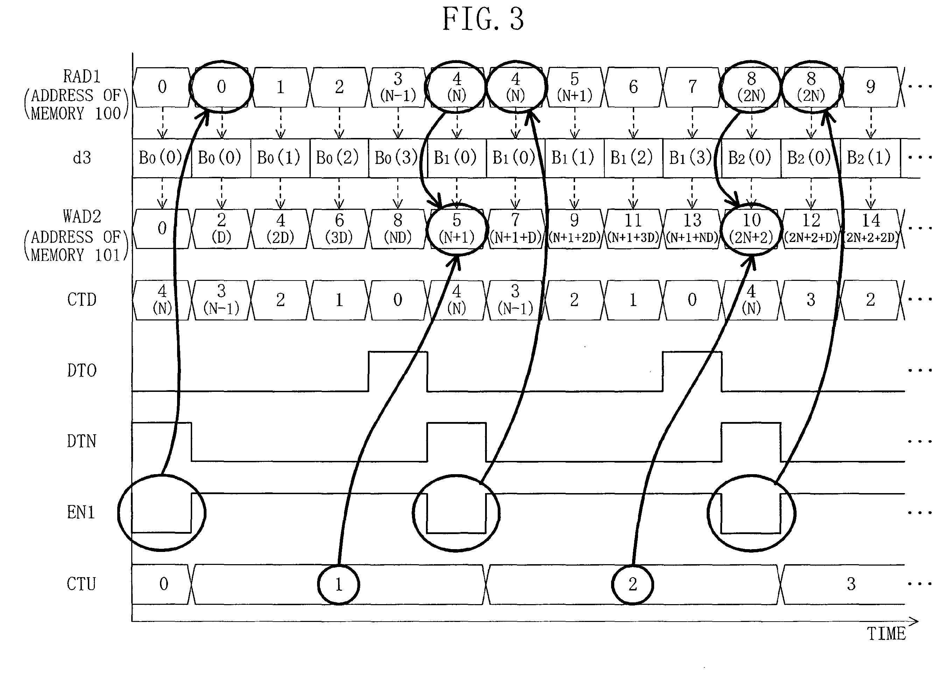

Hereinafter, description will be given with reference to FIG. **3.** It is herein assumed that the frame length **N** is 4 and the interleave depth **D** is 2.

The initial value "0" of the read address **RAD1** is applied from the read address generator **200** to the memory **100.** In response to this, byte data **B**_{**0**}**(0)** is read from address **0** of the memory **100.** The initial value "0" of the write address **WAD2** is then applied from the write address generator **201** to the memory **101.** In response to this, the byte data **B**_{**0**}**(0)** read from the memory **100** is written to address **0** of the memory **101.** Since the frame length **N** (= 4) is an even number, the initial value of the output **CTD** of the down-counter **206** is 4 (= N). Since the output **CTD** of the down-counter **206** is 4 (= N), the output **DTN** of the N-detector **207** goes to logical high level. The least significant bit **LSB** of the frame length **N** (= 4) is zero. Therefore, the enable signal **EN1** goes to logical low level. In response to the logical low level enable signal **EN1** the read address generator **200** stops updating (incrementing) the read address **RAD1.**

The initial value "0" of the read address **RAD1** is again applied from the read address generator **200** to the memory **100.** In response to this, byte data **B**_{**0**}**(0)** is again read from address **0** of the memory **100.** The selector **202** selects the output **A1** of the adder **209** for output. Accordingly, the write address **WAD2** incremented by the interleave length **D** (= 2) is applied from the write address generator **201** to the memory **101.** In other words, the write address generator **201** applies address **2** (= D) to the memory **101** as write address **WAD2.** In response to this, the byte data **B**_{**0**}**(0)** read from the memory **100** is written to address **2** (= D) of the memory **101**. The output **CTD** of the down-counter **206** becomes 3 (= N - 1). In response to this, the output **DTN** of the N-detector **207** goes to logical low level, and the enable signal **EN1** goes to logical high level. In response to the logical high level enable signal **EN1,** the read address generator **200** increments the read address **RAD1** by 1.

Address **1** is applied to the memory **100** as read address **RAD1.** In response to this, byte data **B**_{**0**}**(1)** is read from address **1** of the memory **100.** The write address **WAD2** incremented by the interleave depth **D** (= 2), i.e., address **4** (= 2D), is applied from the write address generator **201** to the memory **101.** In response to this, the byte data **B**_{**0**}**(1)** read from the memory **100** is written to address **4** (= 2D) of the memory **101.** The output **CTD** of the down-counter **206** becomes 2. The enable signal **EN1** remains at logical high level. In response to the logical high level enable signal **EN1,** the read address generator **200** increments the read address **RAD1** by 1.

Address **2** is applied to the memory **100** as read address **RAD1.** In response to this, byte data **B**_{**0**}**(2)** is read from address **2** of the memory **100.** The write address **WAD2** incremented by the interleave depth **D** (= 2), i.e., address **6** (= 3D), is applied from the write address generator **201** to the memory **101.** In response to this, the byte data **B**_{**0**}**(2)** read from the memory **100** is written to address **6** (= 3D) of the memory **101.** The output **CTD** of the down-counter **206** becomes 1. The enable signal **EN1** remains at logical high level. In response to the logical high level enable signal **EN1,** the read address generator **200** increments the read address **RAD1** by 1.

Address **3** (= N - 1) is applied to the memory **100** as read address **RAD1.** In response to this, byte data **B**_{**0**}**(3)** is read from address **3** of the memory **100.** The write address **WAD2** incremented by the interleave depth **D** (= 2), i.e., address **8** (= ND), is applied from the write address generator **201** to the memory **101.** In response to this, the byte data **B**_{**0**}**(3)** read from the memory **100** is written to address **8** (= ND) of the memory **101.** The output **CTD** of the down-counter **206** becomes zero. The enable signal **EN1** remains at logical high level. In response to the logical high level enable signal **EN1,** the read address generator **200** increments the read address **RAD1** by 1.

Address **4** (= N) is applied to the memory **100** as read address **RAD1.** In response to this, byte data **B**_{**1**}**(0)** is read from address **4** (= N) of the memory **100.** Since the output **CTD** of the down-counter **206** is zero, the output **DT0** of the zero-detector **208** responsively goes to logical high level. The least significant bit **LSB** of the frame length **N** is zero. Therefore, the selector **202** selects the output **A2** of the adder **210** for output. The sum of the read address **RAD1** (= 4 = N) and the output **CTU** (= 1) of the up-counter **205** (i.e., 5 = N + 1) is thus applied from the write address generator **201** to the memory **101** as write address **WAD2.** In response to this, the byte data **B**_{**1**}**(0)** read from the memory **100** is written to address **5** (= N + 1) of the memory **101.** The output **CTD** of the down-counter **206** is reset to the initial value 4 (= N). Thereafter, the same process as that described above is repeated.

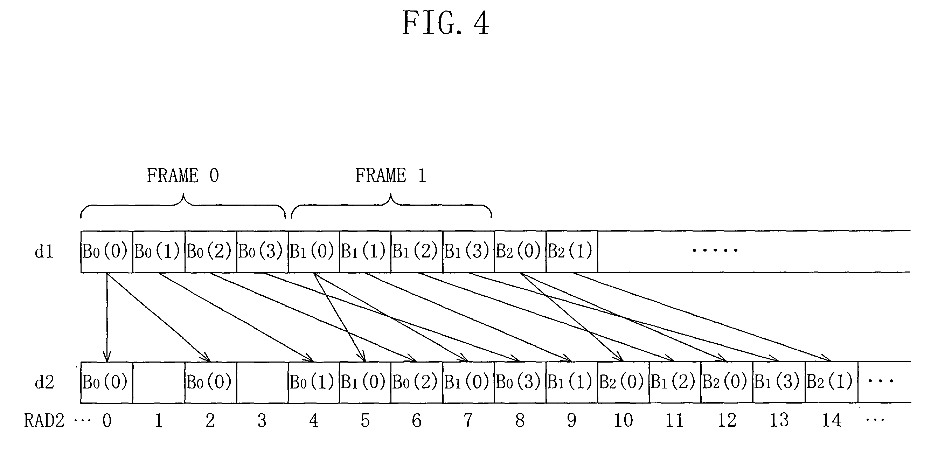

The byte data stored in the memory **101** is read according to the read address **RAD2** from the read address generator **213.** More specifically, byte data is sequentially read from address **0,** address **1,** address **2,** address **3,** and the like of the memory **101.** The data thus read from the memory **101** is output to the outside as output data **d2.** As shown in FIG. **4,** the input data **d1** is rearranged into output data **d2** by the interleave operation of the interleave circuit **1000.**

Thus, when the frame length **N** is an even number, the head byte data in each frame of the input data **d1** is read twice in succession from the memory **100** so as to be inserted as a dummy byte for the interleave operation.

(b) When the frame number **N** is an odd number

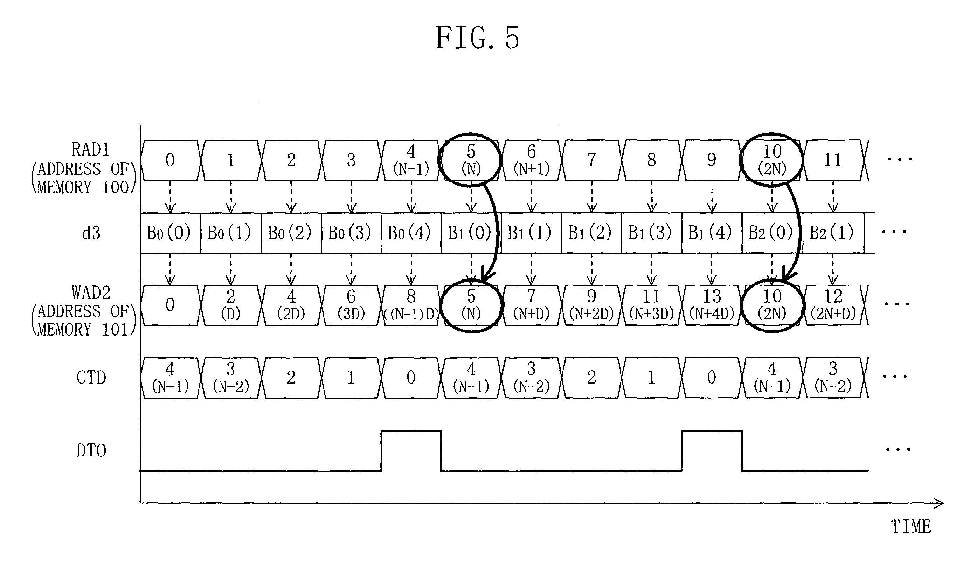

Description will now be given with reference to FIG. **5**. It is herein assumed that the frame length **N** is 5 and the interleave depth **D** is 2.

The initial value "0" of the read address **RAD1** is applied from the read address generator **200** to the memory **100.** In response to this, byte data **B**_{**0**}**(0)** is read from the address **0** of the memory **100.** The initial value "0" of the write address **WAD2** is applied from the write address generator **201** to the memory **101.** In response to this, the byte data **B**_{**0**}**(0)** read from the memory **100** is written to address **0** of the memory **101.** Since the frame length **N** (= 5) is an odd number, the initial value of the output **CTD** of the down-counter **206** is 4 (= N - 1). The least significant bit **LSB** of the frame length **N** (= 5) is 1. Accordingly, the enable signal **EN1** is always at logical high level. In response to the logical high level enable signal **EN1,** the read address generator **200** increments the read address **RAD1** by 1.

Address **1** is applied to the memory **100** as read address **RAD1.** In response to this, byte data **B**_{**0**}**(1)** is read from address **1** of the memory **100.** The selector **202** selects the output **A1** of the adder **209** for output. Accordingly, the write address **WAD2** incremented by the interleave depth **D** (= 2), i.e., address **2** (= D), is applied from the write address generator **201** to the memory **101.** In response to this, the byte data **B**_{**0**}**(1)** read from the memory **100** is written to address **2** (= D) of the memory **101.**

According to the same transfer process as that of byte data **B**_{**0**}**(1),** byte data **B**_{**0**}**(2), B**_{**0**}**(3)** and **B**_{**0**}**(4)** stored in addresses **2, 3** and **4** of the memory **100** are written to addresses **4** (= 2D), **6** (= 3D) and **8** (= 4D) of the memory **101,** respectively.

Once N (= 5) byte data **B**_{**0**}**(0)** to **B**_{**0**}**(4)** are transferred from the memory **100** to the memory **101,** the output **CDT** of the down counter **206** becomes zero, and the detection signal **DT0** goes to logical high level. Since the enable signal **EN1** remains at logical high level, the read address generator **200** increments the read address **RAD1** by 1. The address **5** (= N) is then applied to the memory **100** as read address **RAD1.** In response to this, byte data **B**_{**1**}**(0)** is read from address **5** (= N) of the memory **100.** Since the detection signal **DT0** is at logical high level and the least significant bit **LSB** of the frame length **N** is 1, the selector **202** selects the read address **RAD1** for output. The read address **RAD1** (= 5 = N) is thus applied from the write address generator **201** to the memory **101** as write address **WAD2.** In response to this, byte data **B**_{**1**}**(0)** read from the memory **100** is written to address **5** (= N) of the memory **101.** The output **CTD** of the down-counter **206** is reset to the initial value 4 (= N - 1). Thereafter, the same process as that described above is repeated.

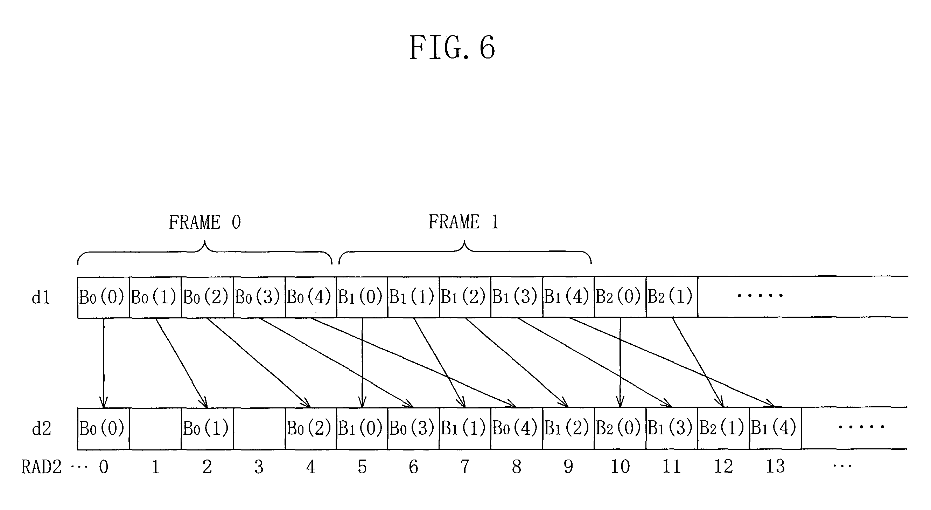

The byte data stored in the memory **101** is read according to the read address **RAD2** from the read address generator **213.** More specifically, the byte data is sequentially read from address **0,** address **1,** address **2,** address **3** and the like of the memory **101.** The data thus read from the memory **101** is output to the outside as output data **d2.** As shown in FIG. **6,** the input data **d1** is rearranged into output data **d2** by the interleave operation of the interleave circuit **1000.**

### [Effects]

As has been described above, in the interleave circuit of the first embodiment, the read address generator **200** generates twice in succession the address at which the head byte data of each frame of the input data **d1** is stored. The head byte data of each frame of the input data **d1** is thus read from the memory **100** twice in succession. Data **d3** of the frame length (N + 1) having the head byte data of each frame inserted as a dummy byte is then written to the memory **101** according to the write address **WAD2** from the write address generator **201.** As a result, the interleave operation according to ITU recommendations G.992.1 and G.992.2 can be conducted whether the frame length **N** of the input data **d1** is an even number or an odd number.

### [Modification]

Note that the above description is given for the case where the frame length **N** of the input data **d1** is 4 and 5. However, the interleave operation can be conducted in the same manner as that described above even when the input data **d1** has another frame length **N.**

Moreover, the above description is given for the case where the interleave depth **D** is 2. However, the interleave operation can be conducted in the same manner as that described above even when the interleave depth **D** has another value (where **D** is 2ⁿ (n is a positive integer)).

In the above description, the head byte data of each frame of the input data **d1** is read twice in succession from the memory **100** so as to be inserted as a dummy byte. Alternatively, another byte data of each frame of the input data **d1** may be read twice in succession from the memory **100** so as to be inserted as a dummy byte.

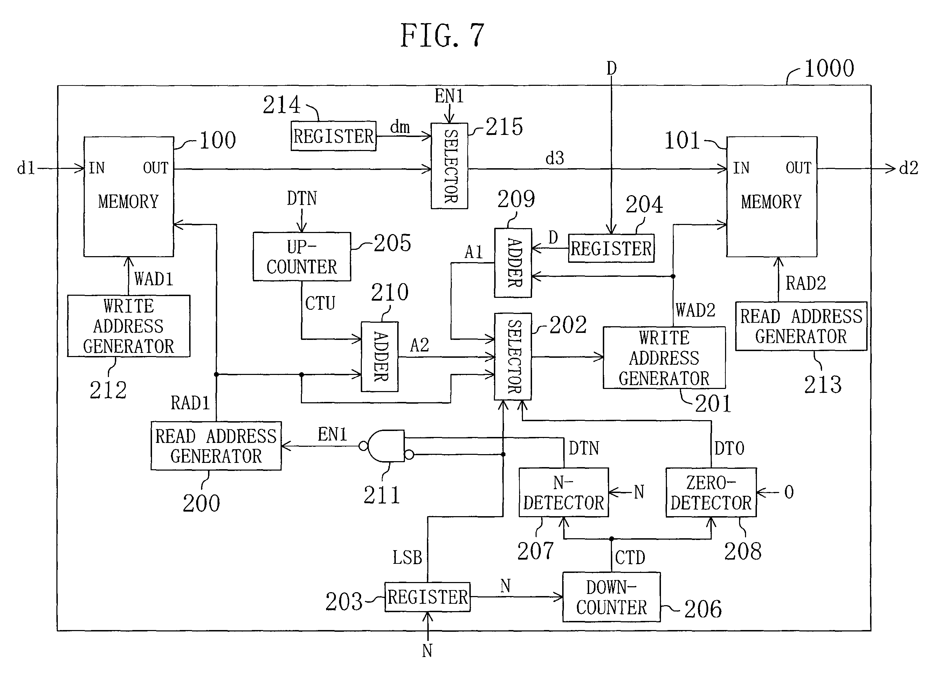

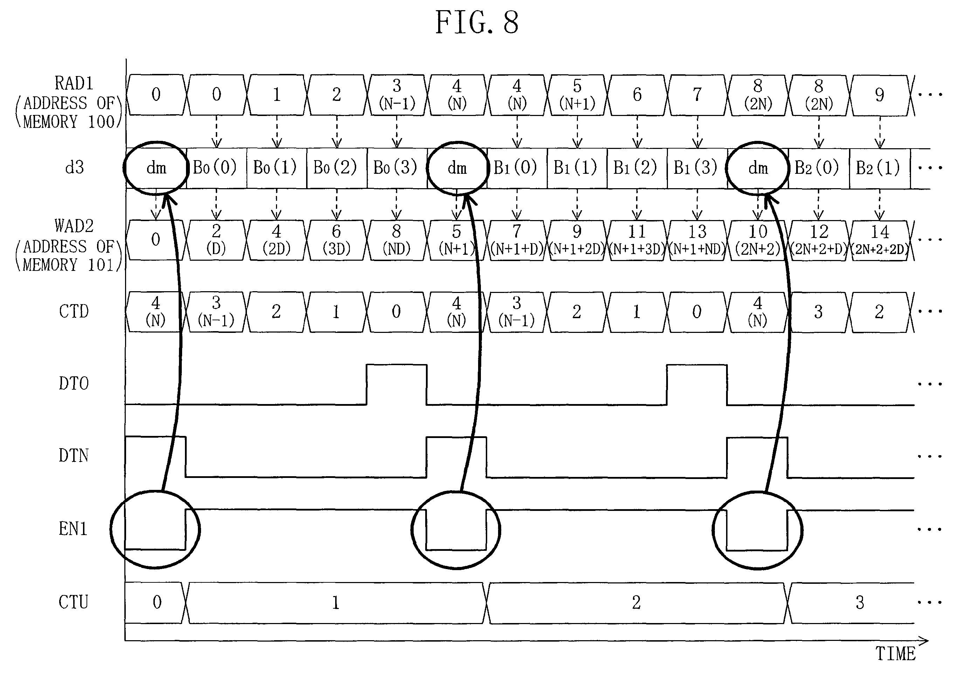

In the above description, the head byte data of each frame of the input data **d1** is inserted as a dummy byte. Alternatively, exclusive dummy byte data **dm** may be inserted. More specifically, as shown in FIG. 7, a register **214** and a selector **215** are provided in addition to the structure of the interleave circuit **1000** of FIG. **1.** The register **214** stores the exclusive dummy byte data **dm.** When the enable signal **EN1** is at logical high level, the selector **215** applies the byte data read form the memory **100** to the memory **101** as data **d3.** When the enable signal **EN1** is at logical low level, the selector **215** applies the dummy byte **dm** stored in the register **214** to the memory **101** as data **d3.** As shown in FIG. **8,** the dummy byte **dm** is thus inserted instead of the head byte data of each frame of the input data **d1.** This modification is also capable of implementing the same functionality as that of the interleave circuit of FIG. **1**.

Another structure is also possible in order to reduce the memory region to be used in the memories **100, 101** as much as possible. More specifically, the read address generators **200, 213** and the write address generators **201, 212** may be structured as follows: If the frame length **N** is an odd number, the read addresses **RAD1, RAD2** and the write addresses **WAD1, WAD2** are reset to the initial value "0" when they exceed (frame length N) × (interleave depth D). If the frame length **N** is an even number, the read addresses **RAD1, RAD2** and the write addresses **WAD1, WAD2** are reset to the initial value "0" when they exceed (N + 1) × D. In this case, the up-counter **205** is structured so as to reset the count value **CTU** to the initial value "0" when it exceeds the value (D - 1). The memory region to be used in the memories **100, 101** is thus N × D bytes when the frame length **N** is an odd number, and (N + 1) × D bytes when the frame length **N** is an even number.

The memories **100, 101** may be replaced with FIFO (First-In First-Out) buffers.

### (Second Embodiment)

### [Structure of De-interleave Circuit]

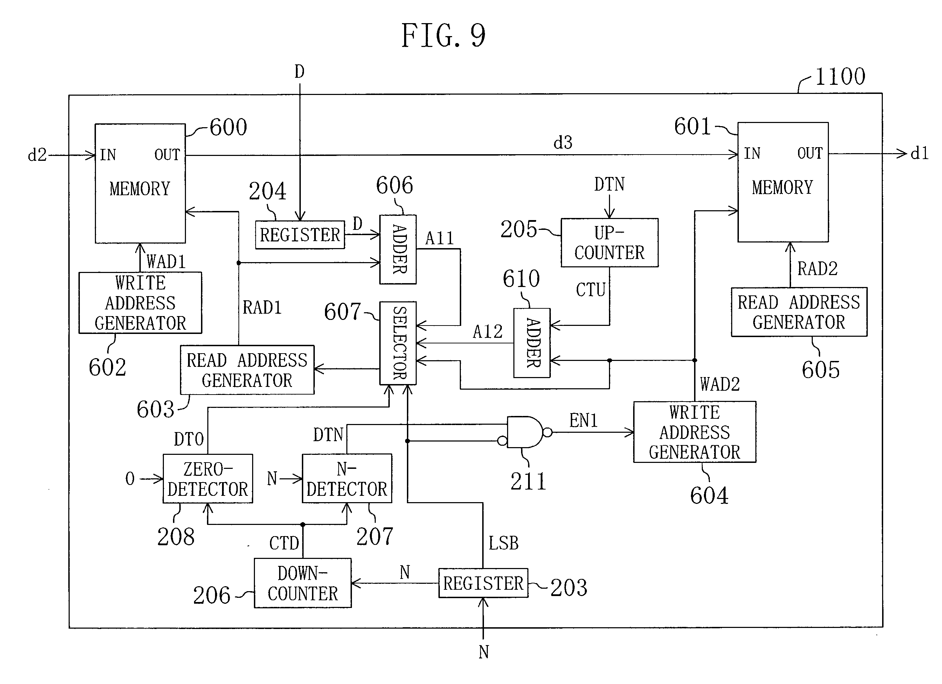

FIG. **9** is a block diagram of the overall structure of a de-interleave circuit according to the second embodiment of the present invention. The de-interleave circuit **1100** of FIG. **9** is a circuit for rearranging the data **d2** resulting from the convolutional interleave operation of the interleave circuit **1000** of FIG. **1** back into the original data **d1** (i.e., the data before the convolutional interleave operation). The de-interleave circuit **1100** of FIG. **9** realizes the de-interleave operation by switching the read-address generation and control mechanism and the write-address generation and control mechanism of the interleave circuit **1000** of FIG. **1** with each other. The de-interleave circuit **1100** of FIG. **9** includes memories **600, 601,** read address generators **603, 605,** write address generators **602, 604,** a selector **607,** registers **203, 204,** an up-counter **205,** a down-counter **206,** an N-detector **207,** a zero-detector **208,** adders **606, 610,** and an enable signal generator **211.**

External input data **d2** is written to the memory **600** according to a write address **WAD1** from the write address generator **602.** The input data **d2** is the data resulting from the convolutional interleave operation of the interleave circuit **1000** of FIG. **1.** The data written to the memory **600** is read according to a read address **RAD1** from the read address generator **603.** The data **d3** thus read from the memory **600** is written to the memory **601** according to a write address **WAD2** from the write address generator **604.** The data written to the memory **601** is read according to a read address **RAD2** from the read address generator **605.** The data **d1** thus read from the memory **601** is output to the outside.

The register **203** stores the frame length **N** applied from the outside. The frame length **N** indicates the number of data included in each frame of the original data **d1** (i.e., the data before the convolutional interleave operation of the interleave circuit **1000** of FIG. 1). The register **204** stores the interleave depth **D** applied from the outside.

The write address generator **602** outputs a write address **WAD1.** The write address generator **602** increments the write address **WAD1** by 1 in response to every write access to the memory **600.** It is herein assumed that the initial value of the write address **WAD1** is zero.

The adder **610** adds the count value **CTU** of the up-counter **205** and the write address **WAD2** from the write address generator **604.** The adder **606** adds the interleave depth **D** stored in the register **204** and the read address **RAD1** from the read address generator **603.**

In response to the detection signal **DT0** from the zero-detector **208** and the least significant bit **LSB** of the frame length **N** stored in the register **203,** the selector **607** selects one of the output **A11** of the adder **606,** the output **A12** of the adder **610** and the write address **WAD2** for output. More specifically, when the detection signal **DT0** from the zero-detector **208** is inactive, the selector **607** selects the output **A11** of the adder **606** for output. When the detection signal **DT0** from the zero-detector **208** is active and the least significant bit **LSB** of the frame length **N** is zero, the selector **607** selects the output **A12** of the adder **610** for output. When the detection signal **DT0** from the zero-detector **208** is active and the least significant bit **LSB** of the frame length **N** is 1, the selector **607** selects the write address **WAD2** for output.

The read address generator **603** outputs the output of the selector **607** as read address **RAD1.** It is herein assumed that the initial value of the read address **RAD1** is zero. The read address **RAD1** is incremented by +D in response to every read access to the memory **600.**

The write address generator **604** outputs a write address **WAD2.** When the enable signal **EN1** from the enable signal generator **211** is active, the write address generator **604** increments the write address **WAD2** by 1 in response to every write access to the memory **601.** When the enable signal **EN1** is inactive, the write address generator **604** does not increment the write address **WAD2.** It is herein assumed that the initial value of the write address **WAD2** is zero.

The read address generator **605** outputs a read address **RAD2.** The read address generator **605** increments the read address **RAD2** by 1 in response to every read access to the memory **601.** It is herein assumed that the initial value of the read address **RAD2** is zero.

### [Operation of De-interleave Operation]

Hereinafter, operation of the de-interleave circuit **1100** thus structured will be described.

Input data **d2** is applied from the outside to the de-interleave circuit **1100.** The input data **d2** is the data resulting from the convolutional interleave operation of the interleave circuit **1000** of FIG. **1**. The input data **d2** is sequentially written to the memory **600** on a byte-by-byte basis according to the write address **WAD1** from the write address generator **602.** The frame length **N** of the data **d1,** i.e., the input data **d2** before the convolutional interleave operation of the interleave circuit **1000,** is applied to the register **203,** and the interleave depth **D** is applied to the register **204.** The interleave depth **D** is herein set to 2ⁿ (where n is a positive integer). Hereinafter, description will be given for the cases where the frame length **N** of the data **d1** is an even number and an odd number.

(a) When the frame length **N** is an even number

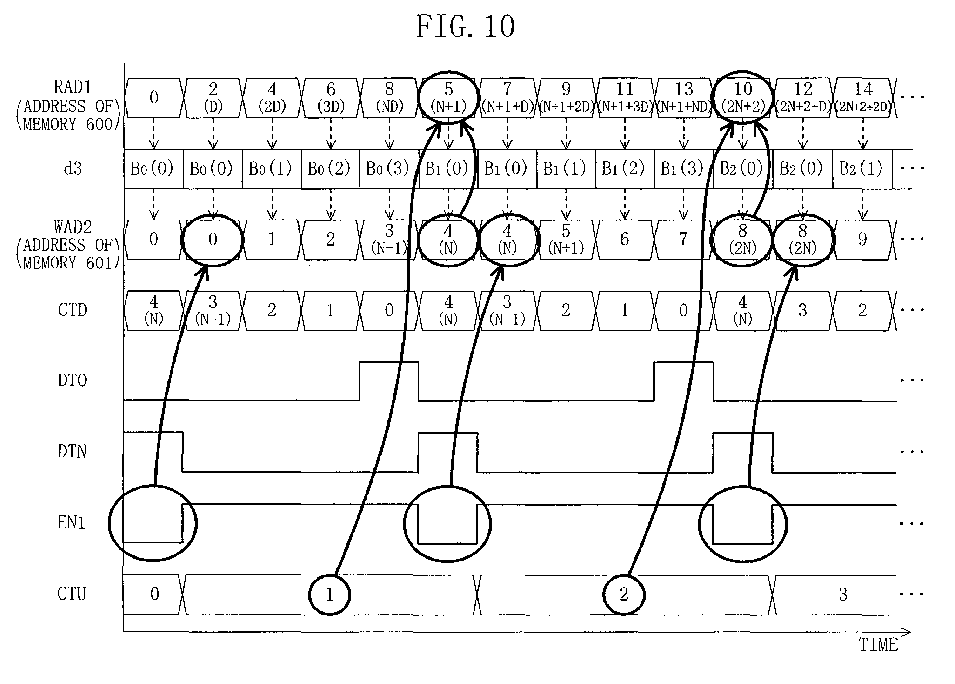

Hereinafter, description will be given with reference to FIG. **10.** It is herein assumed that the frame length **N** is 4 and the interleave depth **D** is 2.

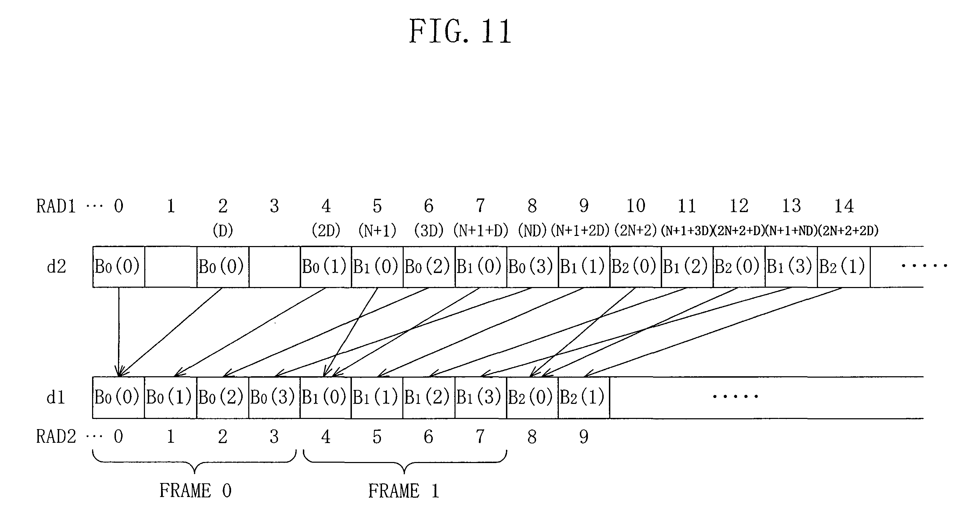

As shown in FIG. **11**, the data **d2** is stored in the memory **600** on a byte-by-byte basis. More specifically, byte data **B**_{**0**}**(0)** of frame **0** is stored at address **0** of the memory **600,** byte data **B**_{**0**}**(0)** of frame **0** is stored at address **2** (= D) thereof, byte data **B**_{**0**}**(1)** of frame **0** is stored at,address **4** (= 2D) thereof, byte data **B**_{**1**}**(0)** of frame **1** is stored at address **5** (= N + 1), and the like.

The initial value "0" of the read address **RAD1** is applied from the read address generator **603** to the memory **600.** In response to this, byte data **B**_{**0**}**(0)** is read from address **0** of the memory **600.** The initial value "0" of the write address **WAD2** is then applied from the write address generator **604** to the memory **601.** In response to this, the byte data **B**_{**0**}**(0)** read from the memory **600** is written to address **0** of the memory **601.** Since the frame length **N (=** 4) is an even number, the initial value of the output **CTD** of the down-counter **206** is set to 4 (= N). Since the output **CTD** of the down-counter **206** is 4 (= N), the output **DTN** of the N-detector **207** goes to logical high level. The least significant bit **LSB** of the frame length **N** (= 4) is zero. Accordingly, the enable signal **EN1** goes to logical low level. In response to the logical low level enable signal **EN1,** the write address generator **604** stops updating (incrementing) the write address **WAD2.**

Since the detection signal **DT0** from the zero-detector **208** is at logical low level, the selector **607** selects the output **A11** of the adder **606** for output. Accordingly, the read address generator **603** applies the read address **RAD1** incremented by the interleave depth **D** (= 2) to the memory **600.** More specifically, address **2** (= D) is applied to the memory **600** as read address **RAD1.** In response to this, byte data **B**_{**0**}**(0)** is read from address **2** (= D) of the memory **600.** Since the write address generator **604** stops updating the write address **WAD2,** the initial value "0" of the write address **WAD2** is again applied to the memory **601.** In response to this, the byte data **B**_{**0**}**(0)** read from the memory **600** is again written to address **0** of the memory **601.** The output **CTD** of the down-counter **206** becomes 3 (= N - 1). In response to this, the output **DTN** of the N-detector **207** goes to logical low level, and the enable signal **EN1** goes to logical high level. In response to the logical high level enable signal **EN1,** the write address generator **604** increments the write address **WAD2** by 1.

The read address **RAD1** incremented by the interleave depth **D** (= 2), i.e., address **4** (= 2D), is applied from the read address generator **603** to the memory **600.** In response to this, byte data **B**_{**0**}**(1)** is read from address **4** (= 2D) of the memory **600.** Address **1** is applied to the memory **601** as write address **WAD2.** In response to this, the byte data **B**_{**0**}**(1)** read from the memory **600** is written to address **1** of the memory **601.** The output **CTD** of the down-counter **206** becomes 2. The enable signal **EN1** remains at logical high level. In response to the logical high level enable signal **EN1,** the write address generator **604** increments the write address **WAD2** by 1.

The read address **RAD1** incremented by the interleave depth **D** (= 2), that is, address **6** (= 3D), is applied from the read address generator **603** to the memory **600.** In response to this, byte data **B**_{**0**}**(2)** is read from address **6** (= 3D) of the memory **600.** Address **2** is applied to the memory **601** as write address **WAD2.** In response to this, the byte data **B**_{**0**}**(2)** read from the memory **600** is written to address **2** of the memory **601.** The output **CTD** of the down-counter **206** becomes 1. The enable signal **EN1** remains at logical high level. In response to the logical high level enable signal **EN1,** the write address generator **604** increments the write address **WAD2** by 1.

The read address **RAD1** incremented by the interleave depth **D** (= 2), i.e., address **8** (= ND), is applied from the read address generator **603** to the memory **600.** In response to this, byte data **B**_{**0**}**(3)** is read from address **8** (= ND) of the memory **600.** Address **3** (= N - 1) is applied to the memory **601** as write address **WAD2.** In response to this, the byte data **B**_{**0**}**(3)** read from the memory **600** is written to address **3** (= N - 1) of the memory **601.** The output **CTD** of the down-counter **206** becomes zero. The enable signal **EN1** remains at logical high level. In response to the logical high level enable signal **EN1,** the write address generator **604** increments the write address **WAD2** by 1.

Since the output **CTD** of the down-counter **206** becomes zero, the output **DT0** of the zero-detector **208** responsively goes to logical high level. The least significant bit **LSB** of the frame length **N** is zero. Therefore, the selector **607** selects the output **A12** of the adder **610** for output. The sum of the write address **WAD2** (= 4 = N) and the output **CTU** (= 1) of the up-counter **205** (i.e., 5 = N + 1) is thus applied from the read address generator **603** to the memory **600** as read address **RAD1.** In response to this, byte data **B**_{**1**}**(0)** is read from address **5** (= N + 1) of the memory **600.** Address **4** (= N) is applied to the memory **601** as write address **WAD2.** In response to this, the byte data **B**_{**1**}**(0)** read from the memory **600** is written to address **4** (= N) of the memory **601.** The output **CTD** of the down-counter **206** is reset to the initial value "4" (= N). Thereafter, the same process as that described above is repeated.

The byte data stored in the memory **601** is read according to the read address **RAD2** from the read address generator **605.** More specifically, the byte data is sequentially read from address **0,** address **1,** address **2,** address **3,** and the like of the memory **601.** The data thus read from the memory **601** is output to the outside as output data **d1.** As shown in FIG. **11,** by the de-interleave operation of the de-interleave circuit **1100,** the byte data arrangement of the input data **d2** is restored to the original arrangement (i.e., the arrangement before the interleave operation of the interleave circuit **1000** of FIG. **1).**

(b) When the frame length **N** is an odd number

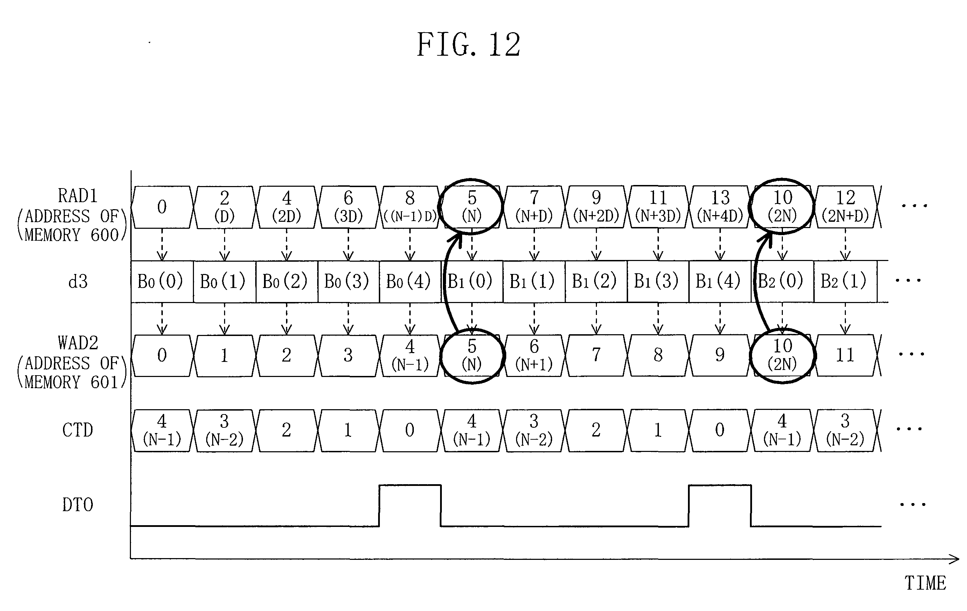

Description will now be given with reference to FIG. **12.** It is herein assumed that the frame length **N** is 5 and the interleave depth **D** is 2.

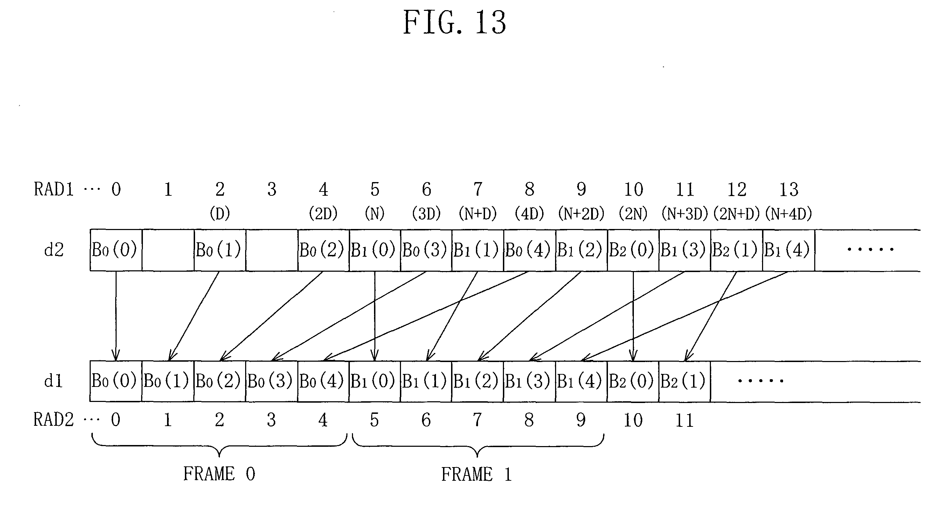

As shown in FIG. **13,** the data **d2** is stored in the memory **600** on a byte-by-byte basis. More specifically, byte data **B**_{**0**}**(0)** of frame **0** is stored at address **0** of the memory **600,** byte data **B**_{**0**}**(1)** of frame **0** is stored at address **2** (= D) thereof, byte data **B**_{**0**}**(2)** of frame **0** is stored at address **4** (= 2D) thereof, byte data **B**_{**1**}**(0)** of frame **1** is stored at address **5** (= N) thereof, and the like.

The initial value "0" of the read address **RAD1** is applied from the read address generator **603** to the memory **600.** In response to this, byte data **B**_{**0**}**(0)** is read from address **0** of the memory **600.** The initial value "0" of the write address **WAD2** is applied from the write address generator **604** to the memory **601.** In response to this, the byte data **B**_{**0**}**(0)** read from the memory **600** is written to address **0** of the memory **601.** Since the frame length **N** (= 5) is an odd number, the initial value of the output **CTD** of the down-counter **206** is set to 4 (= N - 1). The least significant bit **LSB** of the frame length **N** (= 5) is 1. Accordingly, the enable signal **EN1** is always at logical high level. In response to the logical high level enable signal **EN1,** the write address generator **604** increments the write address **WAD2** by 1.

Since the detection signal **DT0** from the zero-detector **208** is at logical low level, the selector **607** selects the output **A11** of the adder **606** for output. Accordingly, the read address **RAD1** incremented by the interleave depth **D** (= 2), that is, address **2** (= D), is applied from the read address generator **603** to the memory **600.** In response to this, byte data **B**_{**0**}**(1)** is read from address **2** (= D) of the memory **600.** Address **1** is applied to the memory **601** as write address **WAD2.** In response to this, the byte data **B**_{**0**}**(1)** read from the memory **600** is written to address **1** of the memory **601.**

According to the same transfer process as that of the byte data **B**_{**0**}**(1),** byte data **B**_{**0**}**(2), B**_{**0**}**(3)** and **B**_{**0**}**(4)** stored in addresses **4 (=** 2D), **6** (= 3D) and **8** (= 4D) of the memory **600** are written to addresses **2, 3** and **4** of the memory **601,** respectively.

Once N (= 5) byte data **B**_{**0**}**(0)** to **B**_{**0**}**(4)** are transferred from the memory **600** to the memory **601,** the output **CDT** of the down-counter **206** becomes zero, and the detection signal **DT0** goes to logical high level. Since the enable signal **EN1** remains at logical high level, the write address generator **604** increments the write address **WAD2** by 1. Since the detection signal **DT0** is at logical high level and the least significant bit **LSB** of the frame length **N** is 1, the selector **607** selects the write address **WAD2** for output. The write address **WAD2** (= 5 = N) is thus applied from the read address generator **603** to the memory **600** as read address **RAD1.** In response to this, byte data **B**_{**1**}**(0)** is read from address **5** (= N) of the memory **600.** Address **5** (= N) is applied to the memory **601** as write address **WAD2.** In response to this, the byte data **B**_{**1**}**(0)** read from the memory **600** is written to address **5** (= N) of the memory **601.** The output **CTD** of the down-counter **206** is reset to the initial value "4" (= N - 1). Thereafter, the same process as that described above is repeated.

The byte data stored in the memory **601** is read according to the read address **RAD2** from the read address generator **605.** More specifically, byte data is sequentially read from address **0,** address **1,** address **2,** address **3,** and the like of the memory **601.** The data thus read from the memory **601** is output to the outside as output data **d1.** As shown in FIG. **13,** by the de-interleave operation of the de-interleave circuit **1100,** the byte data arrangement of the input data **d2** is restored to the original arrangement (i.e., the arrangement before the interleave operation of the interleave circuit **1000** of FIG. 1)

### [Effects]

As has been described above, the de-interleave circuit of the second embodiment realizes the de-interleave operation by switching the read-address generation and control mechanism and the write-address generation and control mechanism of the interleave circuit **1000** of FIG. **1** with each other. When the frame length **N** is an even number, the head byte data in each frame of the data **d1** is written to the same address of the memory **601** twice in succession. This enables the byte data inserted as a dummy byte by the interleave circuit **1000** of FIG. **1** to be removed. As a result, the data **d2** resulting from the convolutional interleave operation of the interleave circuit **1000** of FIG. **1** can be restored to the original data **d1** (i.e., the data before the convolutional interleave operation).

### [Modification]

Note that the above description is given for the case where the frame length **N** of the data **d1** is 4 and 5. However, the de-interleave operation can be conducted in the same manner as that described above even when the input data **d1** has another frame length **N**.

Moreover, the above description is given for the case where the interleave depth **D** is 2. However, the de-interleave operation can be conducted in the same manner as that described above even when the interleave depth **D** has another value (where **D** is 2ⁿ (n is a positive integer)).

### (Third Embodiment)

### [Structure of Interleave Circuit]

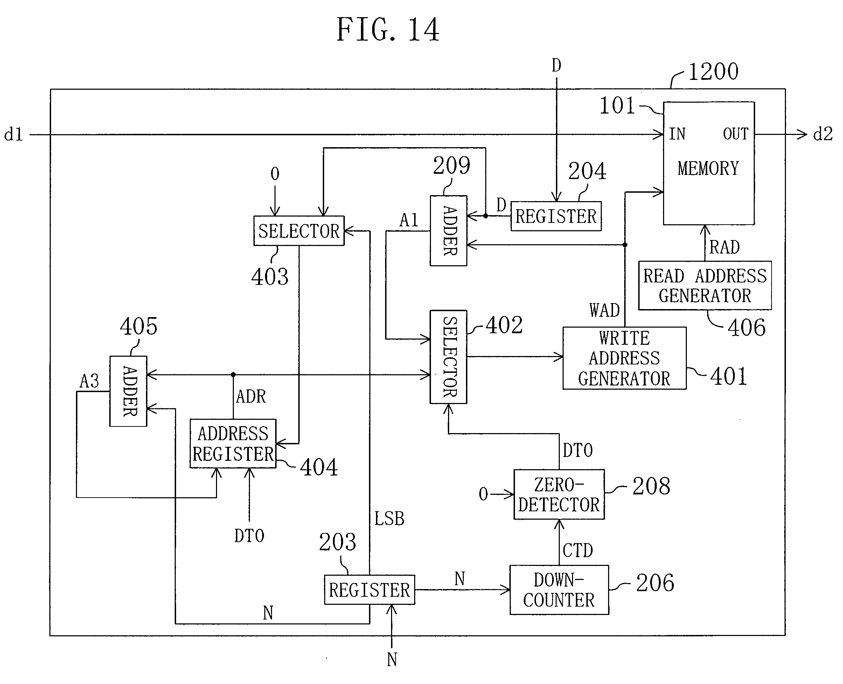

FIG. **14** is a block diagram of the overall structure of an interleave circuit according to the third embodiment of the present invention. The interleave circuit **1200** of FIG. **14** is a convolutional interleave circuit for continuously rearranging input data **d1** regardless of the frame structure and outputting the resultant data as output data **d2.** The interleave circuit **1200** of FIG. **14** includes a memory **101,** registers **203, 204,** a down-counter **206,** a zero-detector **208,** adders **209, 405,** a write address generator **401,** selectors **402, 403,** an address register **404,** and a read address generator **406.**

The interleave circuit **1000** of FIG. **1** first accumulates the input data **d1** in the memory **100** and then write it to the memory **101.** In contrast, the interleave circuit **1200** of Fig. **14** does not include the memory **100,** and writes the input data **d1** directly to the memory **101.** In other words, the external input data **d1** is written to the memory **101** according to a write address **WAD** from the write address generator **401.** The data written to the memory **101** is read according to a read address **RAD** from the read address generator **406.** The data **d2** thus read from the memory **101** is output to the outside.

The down-counter **206** decrements the frame length **N** stored in the register **203** minus 1 (i.e., N - 1) by 1 in response to every write access to the memory **101.** The initial value of the count value **CTD** of the down-counter **206** is herein set to zero.

The selector **403** selects either zero or the interleave depth **D** according to the least significant bit **LSB** of the frame length **N** for output. More specifically, when the least significant bit of the frame length **N** is 1 (when the frame length **N** is an odd number), the selector **403** outputs "zero". When the least significant bit **LBS** of the frame length **N** is zero (when the frame length **N** is an even number), the selector **403** outputs the interleave depth **D.** The output of the selector **403** is set to the address register **404** as an initial value of the address **ADR.**

The adder **405** adds the frame length **N** having its least significant bit replaced with 1 and the output **ADR** of the address register **404.**

The address register **404** stores the output **A3** of the adder **405** as address **ADR** in response to an active detection signal **DT0** from the zero-detector **208.** In other words, the address register **404** updates the address **ADR** every time the output **CTD** of the down-counter **206** becomes zero. The updated value is the sum of the frame length having its least significant bit replaced with 1 and the output **ADR** of the address register **404** before update.

The selector **402** selects either the output **A1** of the adder **209** or the output **ADR of** the address register **404** for output according to the detection signal **DT0** from the zero-detector **208.** More specifically, the selector **402** selects the output **ADR** of the address register **404** in response to an active detection signal **DT0,** and selects the output **A1** of the adder **209** in response to an inactive detection signal **DT0.**

The write address generator **401** outputs the output of the selector **402** as write address **WAD.**

The read address generator **406** outputs a read address **RAD.** The read address generator **406** increments the read address **RAD** by 1 in response to every read access to the memory **101.** The initial value of the read address **RAD** is herein set to zero.

### [Operation of Interleave Circuit]

Hereinafter, operation of the interleave circuit **1200** thus structured will be described.

Input data **d1** is applied from the outside to the interleave circuit **1200.** As shown in FIG. **2,** the input data **d1** is a data string including a plurality of frames. Each frame includes N byte data **B(0)** to **B(N-1).** Accordingly, the number of data included in each frame of the input data **d1,** that is, the frame length of the input data **d1,** is N. The input data **d1** is sequentially applied in the following order: byte data **B**_{**0**}**(0), B**_{**0**}**(1), ...**, **B**_{**0**}**(N-1)** of frame **0,** byte data **B**_{**1**}**(0), B**_{**1**}**(1), ..., B**_{**1**}**(N-1)** of frame **1**, byte data **B**_{**2**}**(0), B**_{**2**}**(1), ...**, **B**_{**2**}**(N-1)** of frame **2** and the like. The frame length **N** of the input data **d1** is applied to the register **203,** and the interleave depth **D** is applied to the register **204.** The interleave depth **D** is herein set to 2ⁿ (where n is a positive integer). Hereinafter, description will be given for the cases where the frame length **N** of the input data **d1** is an even number and an odd number.

(a) When the frame length **N** is an even number

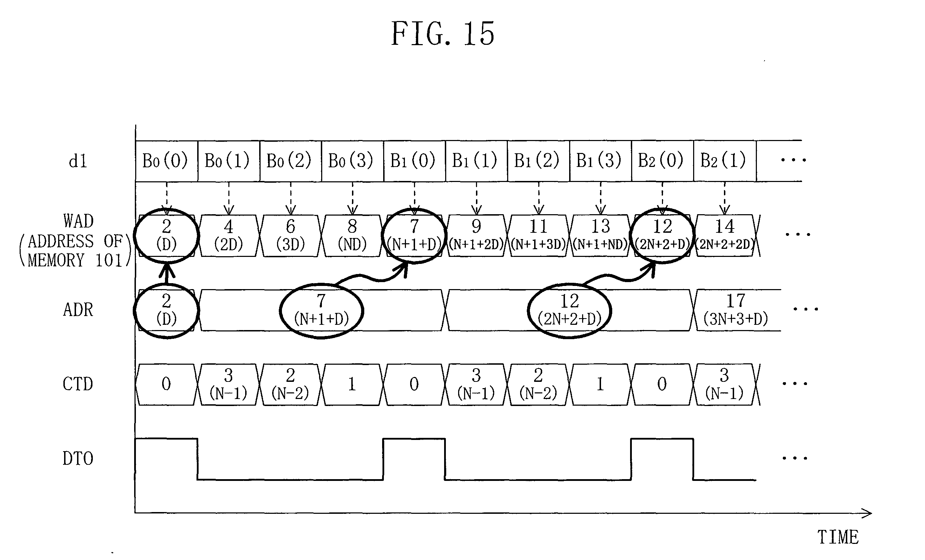

Hereinafter, description will be given with reference to FIG. **15.** It is herein assumed that the frame length **N** is 4 and the interleave depth **D** is 2.

Since the least significant bit **LSB** of the frame length **N** is zero, the selector **403** outputs the interleave depth D (= 2). The output **D** (= 2) of the selector **403** is set to the address register **404** as the initial value of the address **ADR.** Since the output **CDT** of the down-counter **206** is zero (initial value), the detection signal **DT0** from the zero-detector **208** is at logical high level. In response to the logical high level detection signal **DT0,** the selector **402** selects the output **ADR** (= 2 = D) of the address register **404.** Address **2** (= D) is thus applied from the write address generator **401** to the memory **101** as write address **WAD.** In response to this, byte data **B**_{**0**}**(0)** is written to address **2** (= D) of the memory **101.**

The output **CTD** of the down-counter **206** becomes 3 (= N - 1). In response to this, the detection signal **DT0** from the zero-detector **208** goes to logical low level. In response to this, the address register **404** updates the address **ADR** to the output **A3** (7 = (N + 1) + D) of the adder **405.** In response to the logical low level detection signal **DT0,** the selector **402** selects the output **A1** (4 = 2D = D + D) of the adder **209.** Address **4** (= 2D) is thus applied from the write address generator **401** to the memory **101** as write address. In response to this, byte data **B**_{**0**}**(1)** is written to address **4** (= 2D) of the memory **101.**

The output **CTD** of the down-counter **206** becomes 2 (= N - 2). The detection signal **DT0** from the zero-detector **208** remains at logical low level. In response to the logical low level detection signal **DT0,** the selector **402** selects the output **A1** (6 = 2D + D) of the adder **209.** Address **6** (= 3D) is thus applied from the write address generator **401** to the memory **101** as write address. In response to this, byte data **B**_{**0**}**(2)** is written to address **6** (= 3D) of the memory **101.**

The output **CTD** of the down-counter **206** becomes 1. The detection signal **DT0** from the zero-detector **208** remains at logical low level. In response to the logical low level detection signal **DT0,** the selector **402** selects the output **A1** (8 = 3D + D = ND) of the adder **209.** Address **8** (= ND) is thus applied from the write address generator **401** to the memory **101** as write address. In response to this, byte data **B**_{**0**}**(3)** is written to address **8** (= ND) of the memory **101.**

The output **CTD** of the down-counter **206** becomes zero. In response to this, the detection signal **DT0** from the zero-detector **208** goes to logical high level. In response to the logical high level detection signal **DT0,** the selector **402** selects the output **ADR** (7 = (N + 1) + D) of the address register **404.** Address **7** (= N + 1 + D) is thus applied from the write address generator **401** to the memory **101** as write address **WAD.** In response to this, byte data **B**_{**1**}**(0)** is written to address **7** (= N + 1 + D) of the memory **101.**

The output **CTD** of the down-counter **206** becomes 3 (= N - 1). In response to this, the detection signal **DT0** from the zero-detector **208** goes to logical low level. In response to this, the address register **404** updates the address **ADR** to the output **A3** (12 = (N + 1) + (N + 1 + D) = 2N + 2 + D) of the adder **405.** In response to the logical low level detection signal **DT0,** the selector **402** selects the output **A1** (9 = (N + 1 + D) + D) of the adder **209.** Address **9** (= N + 1 + 2D) is thus applied from the write address generator **401** to the memory **101** as write address. In response to this, byte data **B**_{**1**}**(1)** is written to address **9** (= N + 1 + 2D) of the memory **101.** Thereafter, the same process as that described above is repeated.

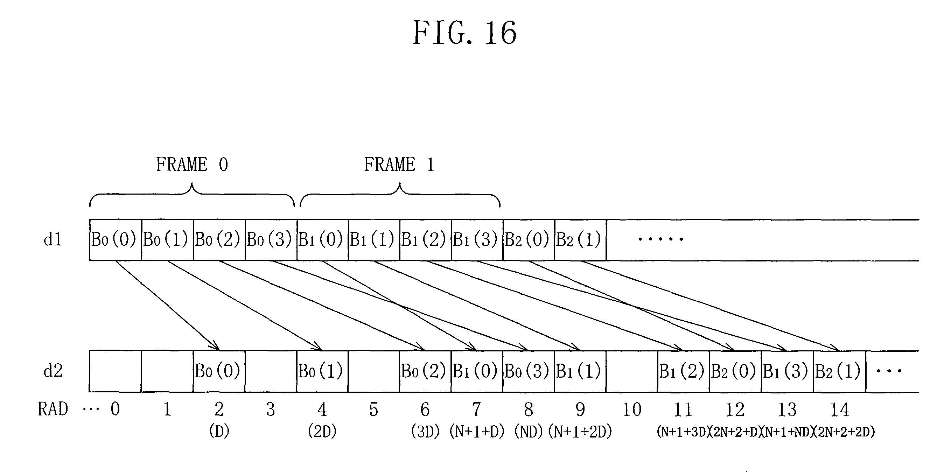

The byte data stored in the memory **101** is read according to the read address **RAD** from the read address generator **406.** More specifically, the byte data is sequentially read from address **0,** address **1,** address **2,** address **3,** and the like of the memory **101.** The data thus read from the memory **101** is output to the outside as output data **d2.** As shown in FIG. **16,** the input data **d2** is rearranged into output data **d2** by the interleave operation of the interleave circuit **1200.**

(b) When the frame length **N** is an odd number

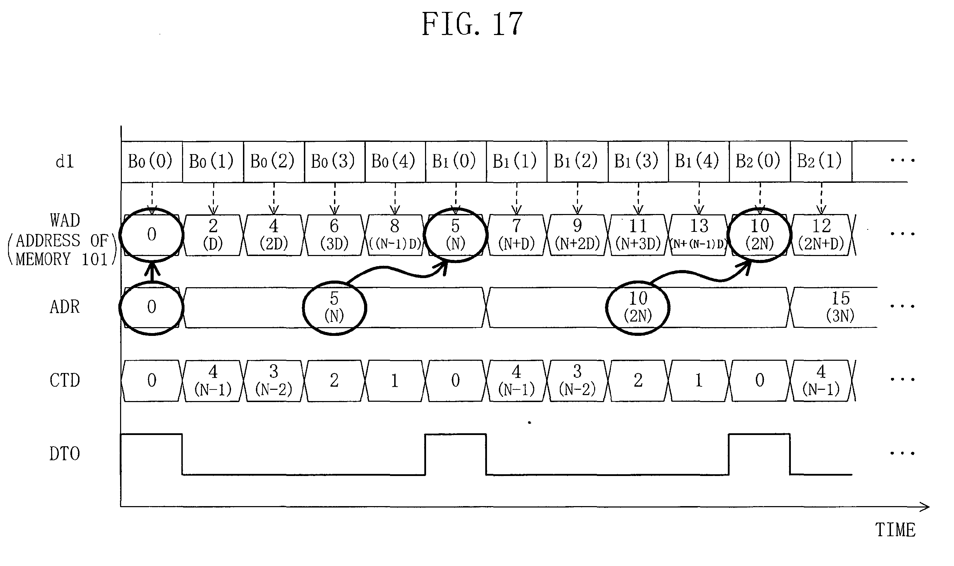

Description will now be given with reference to FIG. **17.** It is herein assumed that the frame length **N** is 5 and the interleave depth **D** is 2.

Since the least significant bit **LSB** of the frame length **N** is 1, the selector **403** outputs zero. The output "0" of the selector **403** is set to the address register **404** as the initial value of the address **ADR.** Since the output **CDT** of the down-counter **206** is zero (initial value), the detection signal **DT0** from the zero-detector **208** is at logical high level. In response to the logical high level detection signal **DT0,** the selector **402** selects the output **ADR** (= 0) of the address register **404.** Address **0** is thus applied from the write address generator **401** to the memory **101** as write address **WAD.** In response to this, byte data **B**_{**0**}**(0)** is written to address **0** of the memory **101.**

The output **CTD** of the down-counter **206** becomes 4 (= N - 1). In response to this, the detection signal **DT0** from the zero-detector **208** goes to logical low level. In response to this, the address register **404** updates the address **ADR** to the output **A3** (5 = N + 0) of the adder **405.** In response to the logical low level detection signal **DT0,** the selector **402** selects the output **A1** (2 = D + 0) of the adder **209.** Address 2 (= D) is thus applied from the write address generator **401** to the memory **101** as write address. In response to this, byte data **B**_{**0**}**(1)** is written to address 2 (= D) of the memory **101.**

The output **CTD** of the down-counter **206** becomes 3 (= N - 2). The detection signal **DT0** from the zero-detector **208** remains at logical low level. In response to the logical low level detection signal **DT0,** the selector **402** selects the output **A1** (4 = D + D) of the adder **209.** Address 4 (= 2D) is thus applied from the write address generator **401** to the memory **101** as write address. In response to this, byte data **B**_{**0**}**(2)** is written to address 4 (= 2D) of the memory **101.**

The output **CTD** of the down-counter **206** becomes 2. The detection signal **DT0** from the zero-detector **208** remains at logical low level. In response to the logical low level detection signal **DT0,** the selector **402** selects the output **A1** (6 = 2D + D) of the adder **209.** Address **6** (= 3D) is thus applied from the write address generator **401** to the memory **101** as write address. In response to this, byte data **B**_{**0**}**(3)** is written to address **6** (= 3D) of the memory **101.**

The output **CTD** of the down-counter **206** becomes 1. The detection signal **DT0** from the zero-detector **208** remains at logical low level. In response to the logical low level detection signal **DT0,** the selector **402** selects the output **A1** (8 = 3D + D = (N - 1)D) of the adder **209.** Address **8** (= (N - 1)D) is thus applied from the write address generator **401** to the memory **101** as write address. In response to this, byte data **B**_{**0**}**(4)** is written to address **8 (=** (N - 1)D) of the memory **101.**

The output **CTD** of the down-counter **206** becomes zero. In response to this, the detection signal **DT0** from the zero-detector **208** goes to logical high level. In response to the logical high level detection signal **DT0,** the selector **402** selects the output **ADR** (5 = N) of the address register **404.** Address **5** (= N) is thus applied from the write address generator **401** to the memory **101** as write address **WAD.** In response to this, byte data **B**_{**1**}**(0)** is written to address **5** (= N) of the memory **101.**

The output **CTD** of the down-counter **206** becomes 4 (= N - 1). In response to this, the detection signal **DT0** from the zero-detector **208** goes to logical low level. In response to this, the address register **404** updates the address **ADR** to the output **A3** (10 = N + N) of the adder **405.** In response to the logical low level detection signal **DT0,** the selector **402** selects the output **A1** (7 = N + D) of the adder **209.** Address **7** (= N + D) is thus applied from the write address generator **401** to the memory **101** as write address. In response to this, byte data **B**_{**1**}**(1)** is written to address **7** (= N + D) of the memory **101.** Thereafter, the same process as that described above is repeated.

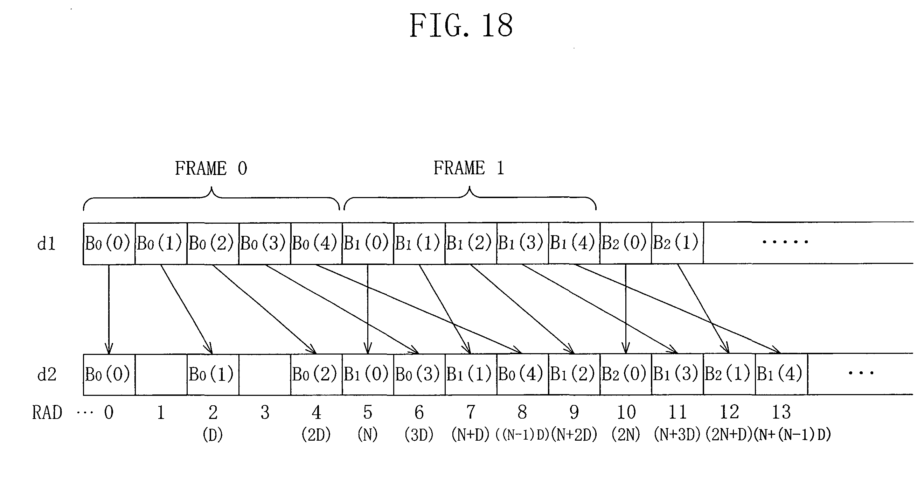

The byte data stored in the memory **101** is read according to the read address **RAD** from the read address generator **406.** More specifically, the byte data are sequentially read from address **0,** address **1,** address **2,** address **3,** and the like of the memory **101.** The data thus read from the memory **101** is output to the outside as output data **d2.** As shown in FIG. **18,** the input data **d1** is rearranged into output data **d2** by the interleave operation of the interleave circuit **1200.**

### [Effects]

As has been described above, the interleave circuit **1200** of the third embodiment is capable of conducting the convolutional interleave operation whether the frame length **N** of the input data **d1** is an even number or an odd number. In other words, the interleave operation according to ITU recommendations G.992.1 and G.992.2 can be conducted whether the frame length **N** of the input data **d1** is an even number or an odd number.

### [Modification]

Note that the above description is given for the case where the frame length **N** of the input data **d1** is 4 and 5. However, the interleave operation can be conducted in the same manner as that described above even when the input data **d1** has another frame length **N.**

Moreover, the above description is given for the case where the interleave depth **D** is 2. However, the interleave operation can be conducted in the same manner as that described above even when the interleave depth **D** has another value (where **D** is 2ⁿ (n is a positive integer)).

Another structure is also possible in order to reduce the memory region to be used in the memory **101** as much as possible. More specifically, the write address generator **401** and the read address generator **406** may be structured as follows: If the frame length **N** is an odd number, the write address **WAD** and the read address **RAD** are reset to the initial value "0" when they exceed (frame length N) × (interleave depth D). If the frame length **N** is an even number, the write address **WAD** and the read address **RAD** are reset to the initial value "0" when they exceed (N + 1) × D. The memory region to be used in the memory **101** is thus N × D bytes when the frame length **N** is an odd number, and (N + 1) × D bytes when the frame length **N** is an even number.

The memory **101** may be replaced with a FIFO buffer.

### (Fourth Embodiment)

### [Structure of De-interleave Circuit]

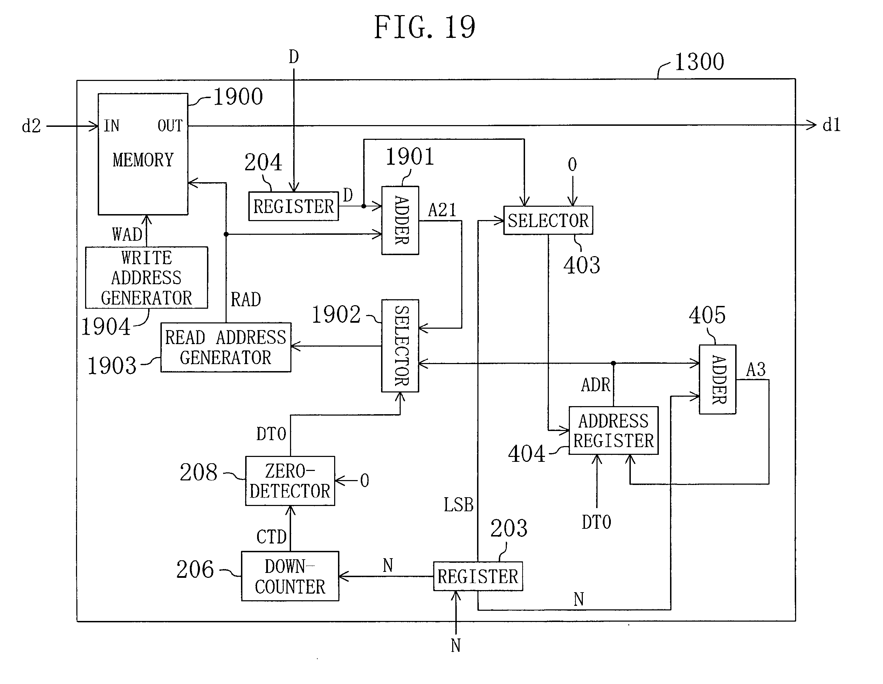

FIG. **19** is a block diagram of the overall structure of a de-interleave circuit according to the fourth embodiment of the present invention. The de-interleave circuit **1300** of FIG. **19** is a circuit for rearranging the data **d2** resulting from the convolutional interleave operation of the interleave circuit **1200** of FIG. **14** back into the original data **d1** (i.e., the data before the convolutional interleave operation). The de-interleave circuit **1300** of FIG. **19** realizes the de-interleave operation by switching the read-address generation and control mechanism and the write-address generation and control mechanism of the interleave circuit **1200** of FIG. **14** with each other. The de-interleave circuit **1300** of FIG. **19** includes a memory **1900,** registers **203, 204,** a down-counter **206,** a zero-detector **208,** adders **405, 1901,** a read address generator **1903,** selectors **403, 1902,** an address register **404,** and a write address generator **1904.**

External input data **d2** is written to the memory **1900** according to a write address **WAD** from the write address generator **1904.** The input data **d2** is the data resulting from the convolutional interleave operation of the interleave circuit **1200** of FIG. **14.** The data written to the memory **1900** is read according to a read address **RAD** from the read address generator **1903.** The data **d1** thus read from the memory **1900** is output to the outside.

The register **203** stores the frame length **N** applied from the outside. The frame length **N** indicates the number of data included in each frame of the original data **d1** (i.e., the data before the convolutional interleave operation of the interleave circuit **1200** of FIG. **14).** The register **204** stores the interleave depth **D** applied from the outside.

The down-counter **206** decrements the frame length **N** stored in the register **203** minus 1 (i.e., N - 1) by 1 in response to every read access to the memory **1900.** The initial value of the count value **CTD** of the down-counter **206** is herein set to zero.

The adder **1901** adds the interleave depth **D** stored in the register **204** and the read address **RAD** from the read address generator **1903.**

In response to the detection signal **DT0** from the zero-detector **208,** the selector **1902** selects either the output **A21** of the adder **1901** or the output **ADR** of the address register **404** for output. More specifically, the selector **1902** selects the output **ADR** of the address register **404** in response to an active detection signal **DT0,** and selects the output **A21** of the adder **1901** in response to an inactive detection signal **DT0.**

The read address generator **1903** outputs the output of the selector **1902** as read address **RAD.**

The write address generator **1904** outputs a write address **WAD.** The write address generator **1904** increments the write address **WAD** by 1 in response to every write access to the memory **1900.** The initial value of the write address **WAD** is herein set to zero.

### [Operation of De-interleave Operation]

Hereinafter, operation of the de-interleave circuit **1300** thus structured will be described.

Input data **d2** is applied from the outside to the de-interleave circuit **1300.** The input data **d2** is the data resulting from the convolutional interleave operation of the interleave circuit **1200** of FIG. **14.** The input data **d2** is sequentially written to the memory **1900** on a byte-by-byte basis according to the write address **WAD** from the write address generator **1904.** The frame length **N** of the original data **d1,** that is, the input data **d2** before the convolutional interleave operation of the interleave circuit **1200** of FIG. **14,** is applied to the register **203,** and the interleave depth **D** is applied to the register **204.** The interleave depth **D** is herein set to 2ⁿ (where n is a positive integer). Hereinafter, description will be given for the cases where the frame length **N** of the data **d1** is an even number and an odd number.

(a) When the frame length **N** is an even number

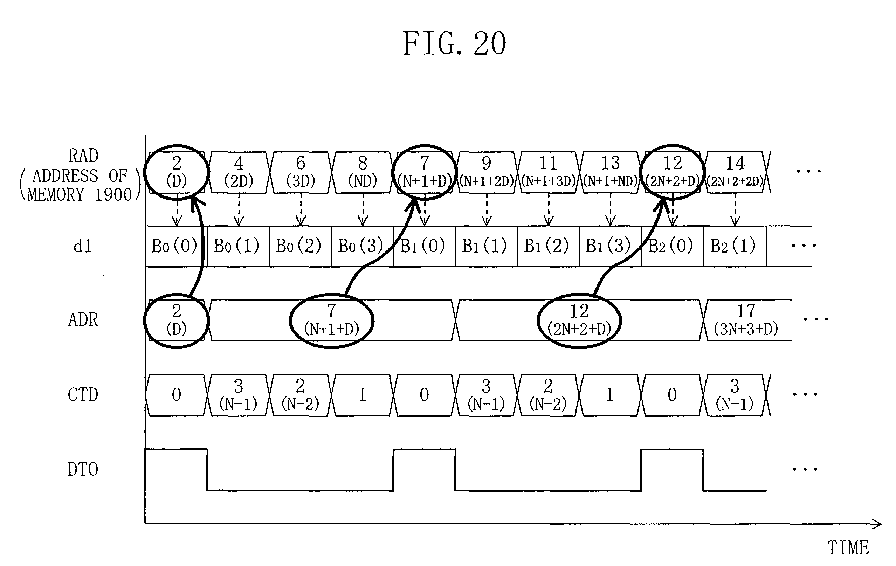

Hereinafter, description will be given with reference to FIG. **20.** It is herein assumed that the frame length **N** is 4 and the interleave depth **D** is 2.

As shown in FIG. **16,** the data **d2** is sequentially stored in the memory **1900** on a byte-by-byte basis.

Since the least significant bit **LSB** of the frame length **N** is zero, the selector **403** outputs the interleave depth **D** (= 2). The output **D** (= 2) of the selector **403** is set to the address register **404** as the initial value of the address **ADR.** Since the output **CDT** of the down-counter **206** is zero (initial value), the detection signal **DT0** from the zero-detector 208 is at logical high level. In response to the logical high level detection signal **DT0,** the selector **1902** selects the output **ADR** (= 2 = D) of the address register **404.** Address **2** (= D) is thus applied from the read address generator **1903** to the memory **1900** as read address **RAD.** In response to this, byte data **B**_{**0**}**(0)** is read from address **2** (= D) of the memory **1900.**

The output **CTD** of the down-counter **206** becomes 3 (= N - 1). In response to this, the detection signal **DT0** from the zero-detector **208** goes to logical low level. In response to this, the address register **404** updates the address **ADR** to the output **A3** (7 = N + 1 + D) of the adder **405.** In response to the logical low level detection signal **DT0,** the selector **1902** selects the output **A21** (4 = 2D = D + D) of the adder 1901. Address **4** (= 2D) is thus applied from the read address generator **1903** to the memory **1900** as read address. In response to this, byte data **B**_{**0**}**(1)** is read from address **4** (= 2D) of the memory **1900.**

Byte data **B**_{**0**}**(2), B**_{**0**}**(3)** are respectively read from addresses **6** (= 3D), **8** (= ND) of the memory **1900** in the same manner as that of the byte data **B**_{**0**}**(1).**

The output **CTD** of the down-counter **206** becomes zero. In response to this, the detection signal **DT0** from the zero-detector **208** goes to logical high level. In response to the logical high level detection signal **DT0,** the selector **1902** selects the output **ADR** (7 = (N + 1) + D) of the address register **404.** Address **7** (= N + 1 + D) is thus applied from the read address generator **1903** to the memory **1900** as read address **RAD.** In response to this, the byte data **B**_{**1**}**(0)** is read from address **7** (= N + 1 + D) of the memory **1900.**

The output **CTD** of the down-counter **206** becomes 3 (= N - 1). In response to this, the detection signal **DT0** from the zero-detector **208** goes to logical low level. In response to this, the address register **404** updates the address **ADR** to the output **A3** (12 - (N + 1) + (N + 1 + D) = 2N + 2 + D) of the adder **405.** In response to the logical low level detection signal **DT0,** the selector **1902** selects the output **A21** (9 = (N + 1 + D) + D) of the adder **1901.** Address **9** (= N + 1 + 2D) is thus applied from the read address generator **1903** to the memory **1900** as read address. In response to this, byte data **B**_{**1**}**(1)** is read from address **9** (= N + 1 + 2D) of the memory **1900.** Thereafter, the same process as that described above is repeated.

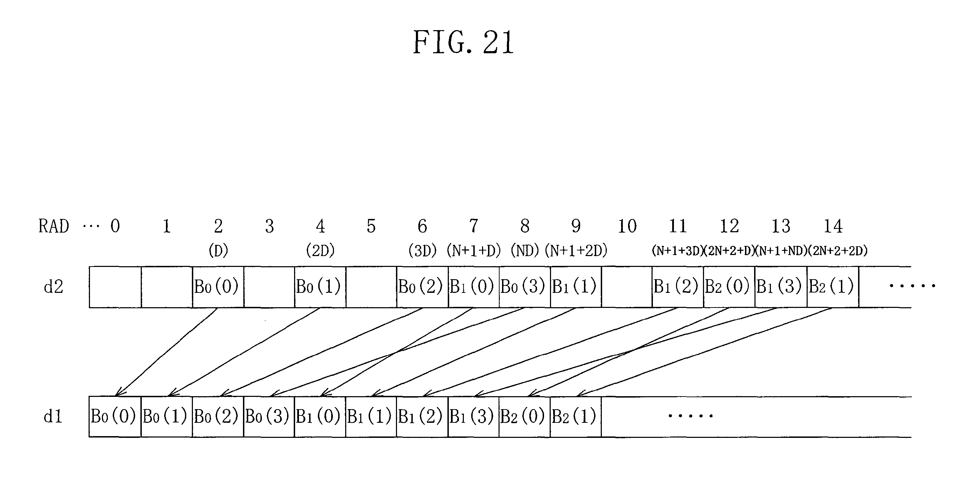

The data read from the memory **1900** is output to the outside as output data **d1.** As shown in FIG. **21,** by the de-interleave operation of the de-interleave circuit **1300,** the byte data arrangement of the input data **d2** is restored to the original arrangement (i.e., the arrangement before the interleave operation of the interleave circuit **1200** of FIG. **14).**

(b) When the frame length **N** is an odd number

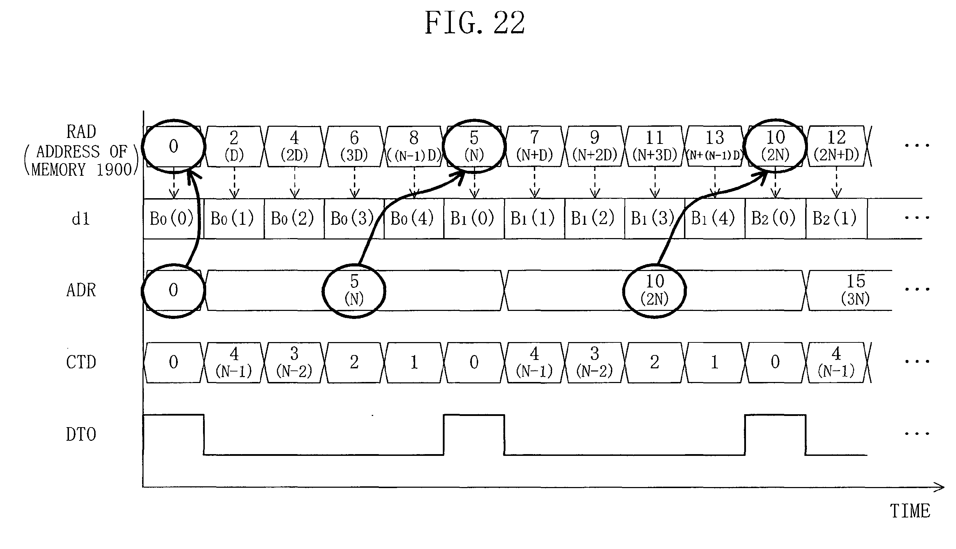

Description will now be given with reference to FIG. **22.** It is herein assumed that the frame length **N** is 5 and the interleave depth **D** is 2.

As shown in FIG. **18,** the data **d2** is sequentially stored in the memory **1900** on a byte-by-byte basis.

Since the least significant bit **LSB** of the frame length **N** is 1, the selector **403** outputs zero. The output "0" of the selector **403** is set to the address register **404** as the initial value of the address **ADR.** Since the output **CDT** of the down-counter **206** is zero (initial value), the detection signal **DT0** from the zero-detector **208** is at logical high level. In response to the logical high level detection signal **DT0,** the selector **1902** selects the output "0" of the address register **404.** Address **0** is thus applied from the read address generator **1903** to the memory **1900** as read address **RAD.** In response to this, byte data **B**_{**0**}**(0)** is read from address **0** of the memory **1900.**

The output **CTD** of the down-counter **206** becomes 4 (= N - 1). In response to this, the detection signal **DT0** from the zero-detector **208** goes to logical low level. In response to this, the address register **404** updates the address **ADR** to the output **A3** (5 = N + 0) of the adder **405.** In response to the logical low level detection signal **DT0,** the selector **1902** selects the output **A21** (2 = D = 0 + D) of the adder **1901.** Address **2** (= D) is thus applied from the read address generator **1903** to the memory **1900** as read address. In response to this, byte data **B**_{**0**}**(1)** is read from address **2** (= D) of the memory **1900.**

Byte data **B**_{**0**}**(2), B**_{**0**}**(3)** and **B**_{**0**}**(4)** are respectively read from addresses **4** (= 2D), **6** (= 3D) and **8** (= (N - 1)D) of the memory **1900** in the same manner as that of the byte data **B**_{**0**}**(1).**

The output **CTD** of the down-counter **206** becomes zero. In response to this, the detection signal **DT0** from the zero-detector **208** goes to logical high level. In response to the logical high level detection signal **DT0,** the selector **1902** selects the output **ADR** (= 5 = N) of the address register **404.** Address **5** (= N) is thus applied from the read address generator **1903** to the memory **1900** as read address **RAD.** In response to this, byte data **B**_{**1**}**(0)** is read from address **5** (= N) of the memory **1900.**

The output **CTD** of the down-counter **206** becomes 4 (= N - 1). In response to this, the detection signal **DT0** from the zero-detector **208** goes to logical low level. In response to this, the address register **404** updates the address **ADR** to the output **A3** (10 = N + N = 2N) of the adder **405.** In response to the logical low level detection signal **DT0,** the selector **1902** selects the output **A21** (7 = N + D) of the adder **1901.** Address **7** (= N + D) is thus applied from the read address generator **1903** to the memory **1900** as read address. In response to this, byte data **B**_{**1**}**(1)** is read from address **7** (= N + D) of the memory **1900.** Thereafter, the same process as that described above is repeated.

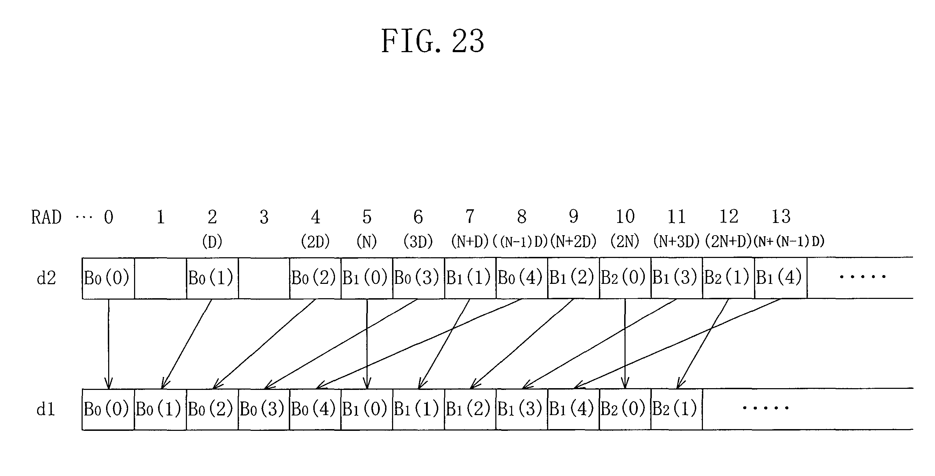

The data thus read from the memory **1900** is output to the outside as output data **d1.** As shown in FIG. **23,** by the de-interleave operation of the de-interleave circuit **1300,** the byte data arrangement of the input data **d2** is restored to the original arrangement (i.e., the arrangement before the interleave operation of the interleave circuit **1200** of FIG. **14).**

### [Effects]

As has been described above, the de-interleave circuit **1300** of the fourth embodiment realizes the de-interleave operation by switching the read-address generation and control mechanism and the write-address generation and control mechanism of the interleave circuit **1200** of FIG. **14** with each other. As a result, the data **d2** resulting from the convolutional interleave operation of the interleave circuit **1200** of FIG. **14** can be restored to the original data **d1** (i.e., the data before the convolutional interleave operation).

### [Modification]

Note that the above description is given for the case where the frame length **N** of the input data **d1** is 4 and 5. However, the de-interleave operation can be conducted in the same manner as that described above even when the input data **d1** has another frame length **N.**

Moreover, the above description is given for the case where the interleave depth **D** is 2. However, the de-interleave operation can be conducted in the same manner as described above even when the interleave depth **D** has another value (where **D** is 2ⁿ (n is a positive integer)).

Another structure is also possible in order to reduce the memory region to be used in the memory **1900** as much as possible. More specifically, the read address generator **1903** and the write address generator **1904** may be structured as follows: If the frame length **N** is an odd number, the write address **WAD** and the read address **RAD** are reset to the initial value "0" when they exceed (frame length **N)** × (interleave depth D). If the frame length **N** is an even number, the write address **WAD** and the read address **RAD** are reset to the initial value "0" when they exceed (N + 1) × D. The memory region to be used in the memory **1900** is thus N × D bytes when the frame length **N** is an odd number, and (N + 1) × D bytes when the frame length **N** is an even number.

The memory **1900** may be replaced with a FIFO buffer.

### (Fifth Embodiment)

### [Structure of ADSL modem]

FIG. **24** is a block diagram of the structure of an ADSL modem (xDSL modem) according to the fifth embodiment of the present invention. The ADSL modem of FIG. **24** includes an RS (Reed-Solomon) encoder **500,** an interleave circuit **1000 (1200),** a DMT (Discrete Multi-Tone) modulation circuit **502,** a D-A (digital-to-analog) converter **510,** an A-D (analog-to-digital) converter **510,** a DMT demodulation circuit **511,** a de-interleave circuit **1100 (1300),** and an RS decoder **513.**

The RS encoder **500** encodes input data from a terminal according to a Reed-Solomon coding method, and outputs the resultant data to the interleave circuit **1000 (1200).** The interleave circuit **1000 (1200),** which is the interleave circuit of FIG. **1** (FIG. **14),** rearranges the Reed-Solomon coded data **d1** by the convolutional interleave operation, and outputs the resultant data to the DMT modulation circuit **502** as data **d2.** The DMT modulation circuit **502** DMT-modulates the data **d2** from the interleave circuit **1000 (1200).** The D-A converter **503** converts the DMT-modulated data into analog signal for output to a transmission path. The A-D converter **510** converts the analog signal from the transmission path into digital signal. The DMT demodulation circuit **511** DMT-demodulates the digital signal thus obtained by the A-D converter **510.** The de-interleave circuit **1100 (1300),** which is the de-interleave circuit of FIG. **9** (FIG. **19),** restores the DMT-demodulated data to the original byte data arrangement by the de-interleave operation, and outputs the resultant data to the RS decoder **513** as data **d1.** The RS decoder **513** conducts error correction of the data **d1** from the de-interleave circuit **1100 (1300)** according to a Reed-Solomon coding method, and outputs the resultant data to the terminal.

### [Operation of ADSL modem]

In the ADSL, the state of a transmission path for communications varies depending on the situations. Therefore, a transmitting ADSL modem and a receiving ADSL modem together determine the code length (frame length) **N** of the Reed-Solomon coded data and the interleave depth **D** in the initialization routine in view of the communication state. It should be noted that the interleave depth **D** is set to 2ⁿ (where n is a positive integer). The code length (frame length) **N** and the interleave depth **D** thus determined are applied to the interleave circuit **1000 (1200)** and the de-interleave circuit **1100 (1300).**

When transmitting the data from the terminal to the transmission path, the ADSL modem first adds a correction bit of the Reed-Solomon code to the input data from the terminal by the RS encoder **500.** The resultant data is then subjected to the convolutional interleave operation of the interleave circuit **1000 (1200),** DMT modulation of the DMT modulation circuit **502,** and conversion into analog signal by the D-A converter **503,** and then is output to the transmission path.

When transferring the received data from the transmission path to the terminal, the ADSL modem first converts the analog data from the transmission path into digital data by the A-D converter **510.** The digital data thus obtained is then DMT-demodulated by the DMT demodulation circuit **511,** and restored by the de-interleave circuit **512.** Thereafter, the resultant data is subjected to error-correction by the RS decoder **513,** and then is transferred to the terminal.

### [Effects]

As has been described above, the ADSL modem of the fifth embodiment includes the interleave circuit **1000 (1200)** of FIG. **1** (FIG. **14)** and the de-interleave circuit **1100 (1300)** of FIG. **9** (FIG. **19),** enabling implementation of the ADSL modem according to ITU recommendations G.992.1 and G.992.2.

## Claims

1. An interleave circuit, comprising:
a first memory for storing a plurality of frames each including N data (where N is a positive integer);
a first read address generating section for sequentially applying to the first memory a read address for reading each of the N data included in each frame stored in the first memory;
a second memory; and
a first write address generating section for applying to the second memory a write address for writing to the second memory the data read from the first memory according to the read address from the first read address generating section,
wherein when N is an even number, the first read address generating section applies twice in succession to the first memory a read address for reading one of the N data included in each frame stored in the first memory,
the first write address generating section applies as the write address to the second memory an address that is incremented by an interleave depth in response to every write access to the second memory,
when N is an even number, the first write address generating section applies a sum of the number of frames that have already been transferred from the first memory to the second memory and a read address of one of the data in each frame that is first read from the first memory as a write address for writing the data first read from the first memory to the second memory, and
when N is an odd number, the first write address generating section applies the read address of the data first read from the first memory as the write address for writing the data first read from the first memory to the second memory.

2. The interleave circuit according to claim 1, wherein the interleave depth is 2ⁿ (where n is a positive integer).

3. The interleave circuit according to claim 1, wherein when N is an even number, the first read address generating section applies to the first memory twice in succession a read address for reading head data of each frame stored in the first memory.

4. The interleave circuit according to claim 1, further comprising:
a register for storing dummy data; and
a selector for selectively applying to the second memory the dummy data stored in the register or the data read from the first memory,
wherein when N is an even number, the selector applies to the second memory the dummy data stored in the register instead of the one of the N data that is read twice in succession from the first memory.

5. The interleave circuit according to claim 1, wherein each of the N data included in each of the plurality of frames is byte data.

6. A circuit for de-interleaving data interleaved by the interleave circuit according to claim 1, comprising:
a third memory for storing the data interleaved by the interleave circuit;
a second read address generating section for applying to the third memory a read address for reading each of the data stored in the third memory;
a fourth memory; and
a second write address generating section for applying to the fourth memory a write address for writing to the fourth memory the data read from the third memory according to the read address from the second read address generating section,
wherein the second read address generating section applies as the read address to the third memory an address that is incremented by the interleave depth in response to every read access to the third memory,
when N is an even number, the second read address generating section applies a sum of the number of frames that have already been transferred from the third memory to the fourth memory and a write address for writing one of the data in each frame that is first read from the first memory of the interleave circuit to the fourth memory as a read address for reading from the third memory the data first read from the first memory,
when N is an odd number, the second read address generating section applies the write address for writing the data that is first read from the first memory to the fourth memory as the read address for reading from the third memory the data first read from the first memory, and
when N is an even number, the second write address generating section applies twice in succession to the fourth memory a write address for writing the one of the N data that is read twice in succession from the first memory of the interleave circuit.

7. An xDSL modem comprising the interleave circuit according to claim 1.

8. An xDSL modem comprising the de-interleave circuit according to claim 6.

9. An interleave circuit, comprising:
a first memory;
a write address generating section for sequentially applying to the first memory a write address for writing each of N data included in each of a plurality of frames (where N is a positive integer);
a first address register for generating, when N is an odd number, a value that has an initial value "0" and that is incremented by N every time N data are written to the first memory, and generating, when N is an even number, a value that has an initial value equal to an interleave depth and that is incremented by (N + 1) every time N data are written to the first memory; and
a first adder for incrementing the write address from the write address generating section by the interleave depth in response to every write access to the first memory,
wherein the write address generating section applies an output of the first address register as a write address for writing head data of each frame to the first memory, and applies an output of the first adder as a write address for writing data other than the head data of each frame to the first memory.

10. The interleave circuit according to claim 9, wherein the interleave depth is 2ⁿ (where n is a positive integer).

11. The interleave circuit according to claim 9, wherein each of the N data included in each of the plurality of frames is byte data.

12. A circuit for de-interleaving data interleaved by the interleave circuit according to claim 9, comprising:
a second memory for storing the data interleaved by the interleave circuit;
a read address generating section for applying to the second memory a read address for reading each data stored in the second memory;
a second address register for generating, when N is an odd number, a value that has an initial value "0" and that is incremented by N every time N data are read from the second memory, and generating, when N is an even number, a value that has an initial value equal to the interleave depth and that is incremented by (N + 1) every time N data are read from the second memory; and
a second adder for incrementing the read address from the read address generating section by the interleave depth in response to every read access to the second memory,
wherein the read address generating section applies an output of the second address register to the second memory as a read address every time N data are read from the second memory, and otherwise applies an output of the second adder to the second memory as a read address.

13. An xDSL modem comprising the interleave circuit according to claim 9.

14. An xDSL modem comprising the de-interleave circuit according to claim 12.
